# EUROPEAN PATENT APPLICATION

(11) **EP 4 818 943 A1**
(43) Date of publication of application: **07.10.2026**
(21) Application number: 26169609.0
(22) Date of filing: 31.03.2026
(51) Int. Cl.: G06F 21/55, G06N 20/00, H04L 9/40

(54) **CYBERSECURITY PLATFORM WITH AUTONOMOUS ARTIFICIAL INTELLIGENCE AGENTS**

(30) Priority: 03.04.2025 US 202519169815
(71) Applicant: Google LLC, Mountain View, CA 94043 (US)
(72) Inventor: COULL, Scott Eric, Mountain View, 94043 (US); SMITH, Nicholas Todd, Mountain View, 94043 (US); KRISILOFF, David Benjamin, Mountain View, 94043 (US); ANDREWS, Christopher Shawn, Toronto, M5C 1G3 (CA); RUDD, Ethan McAvoy, Mountain View, 94043 (US)
(74) Representative: Betten & Resch

(57) **Abstract**

A computing system for autonomous cybersecurity operations includes one or more processors; and one or more non-transitory computer-readable media that store one or more sets of computer-executable instructions that, when executed by the one or more processors, cause the computing system to implement a multi-agent cybersecurity operations framework comprising a plurality of cybersecurity agents; wherein the plurality of cybersecurity agents autonomously interoperate to perform investigation and triage of cybersecurity events for one or more computer networks.

## Description

### FIELD

The present disclosure relates generally to machine learning processes and machine-learned devices and systems. More particularly, the present disclosure relates to a multi-agent cybersecurity platform for autonomously performing cybersecurity operations.

### BACKGROUND

In the field of cybersecurity, organizations are increasingly challenged by the sheer volume and complexity of security alerts or other events generated by their network systems. These events, which signal potential security threats, require timely and accurate analysis to prevent data breaches and other cyber incidents.

However, the manual investigation of these alerts is labor-intensive and often exceeds the capacity of human security analysts. This situation is compounded by the rapid evolution of cyber threats, which requires continuous updates to security protocols and systems.

Furthermore, the integration of various security tools, each generating distinct types of events, adds another layer of complexity. These tools often operate in silos, lacking a unified framework that can aggregate and analyze data across different sources. This fragmentation can lead to inconsistencies in threat handling and delays in response times, potentially leaving systems vulnerable to attacks.

Therefore, there is a technical need for an improved approach to manage and analyze cybersecurity alerts efficiently and effectively.

### SUMMARY

Aspects and advantages of embodiments of the present disclosure will be set forth in part in the following description, or can be learned from the description, or can be learned through practice of the embodiments.

One example aspect is directed to computing system for autonomous cybersecurity operations, the computing system comprising: one or more processors; and one or more non-transitory computer-readable media that store one or more sets of computer-executable instructions that, when executed by the one or more processors, cause the computing system to implement a multi-agent cybersecurity operations framework comprising a plurality of cybersecurity agents; wherein the plurality of cybersecurity agents autonomously interoperate to perform investigation and triage of cybersecurity events for one or more computer networks; wherein each of the plurality of cybersecurity agents comprises a respective structured description of analysis principles and policies for a respective task or workflow performed by the respective cybersecurity agent; wherein each of the plurality of cybersecurity agents is configured to implement or make calls to one or more sequence processing models when performing its respective task or workflow; and wherein, when each cybersecurity agent implements or makes calls to the one or more sequence processing models, the cybersecurity agent is configured to provide at least a portion of the structured description of analysis principles and policies as conditioning data for the one or more sequence processing models.

In some implementations, at least one of the respective structured description of analysis principles and policies for at least one of the plurality of cybersecurity agents contains information structured in a hierarchical structure. In some implementations, the plurality of cybersecurity agents comprise an orchestration agent and a plurality of sub-agents. In some implementations, one or more of the plurality of cybersecurity agents are stateful processes that maintain a dynamic state. In some implementations, one or more of the plurality of cybersecurity agents are configured to perform tool use with respect to one or more tools. In some implementations, the plurality of cybersecurity agents are configured to operate in a multi-stage pipeline, the multi-stage pipeline comprising a deterministic analysis stage in which one or more of the cybersecurity agents operate to: receive an event; extract one or more entity types from the event; and retrieve supplemental information about the one or more entity types from one or more knowledge stores. In some implementations, the plurality of cybersecurity agents are configured to operate in a multi-stage pipeline, the multi-stage pipeline comprising an plan-and-execute stage in which one or more of the cybersecurity agents operate to perform a chain-of-thought planning step to generate a series of agent tasks. In some implementations, the plurality of cybersecurity agents are configured to operate in a multi-stage pipeline, the multi-stage pipeline comprising a ReAct stage in which one or more of the cybersecurity agents operate to dynamically explore context of the event and seek out information to support possible hypotheses using one or more analyses from earlier investigation phases. In some implementations, the plurality of cybersecurity agents are configured to operate in a multi-stage pipeline, the multi-stage pipeline comprising a final decision stage in which one or more of the cybersecurity agents operate to select one or both of: an escalation outcome and a remediation action. In some implementations, the computing system is configured to assign a unique event identifier to each of a plurality of different cybersecurity events investigated by the multi-agent framework and to maintain in a system memory stateful representations of multi-agent interactions associated with the different cybersecurity events indexed according to the unique event identifiers. In some implementations, the system further comprises an investigative state repository that stores previous analysis traces or outcomes associated with previous cybersecurity events investigated by the multi-agent framework; wherein at least one of the plurality of different agents is configured to perform retrieval-augmented-generation with respect to the investigative state repository. In some implementations, the system further comprises an environmental state repository that stores a set of indexed entities and associated information; wherein at least one of the plurality of different agents is configured to perform retrieval-augmented-generation with respect to the environmental state repository.

Another example aspects is directed to one or more non-transitory computer-readable media that store: an investigative state repository that stores previous analysis traces or outcomes associated with previous cybersecurity events; and one or more sets of computer-executable instructions that, when executed by a computing system, cause the computing system to implement a multi-agent cybersecurity operations framework comprising a plurality of cybersecurity agents; wherein the plurality of cybersecurity agents autonomously interoperate to perform investigation and triage of cybersecurity events for one or more computer networks; wherein each of the plurality of cybersecurity agents is configured to implement or make calls to one or more sequence processing models when performing its respective task or workflow; and wherein, when at least one of the cybersecurity agents implements or makes calls to the one or more sequence processing models, the cybersecurity agent is configured to perform retrieval-augmented-generation with respect to the investigative state repository.

In some implementations, the media further store an environmental state repository that stores a set of indexed entities and associated information; wherein at least one of the plurality of different agents is configured to perform retrieval-augmented-generation with respect to the environmental state repository. In some implementations, each of the plurality of cybersecurity agents comprises a respective structured description of analysis principles and policies for a respective task or workflow performed by the respective cybersecurity agent; and when each cybersecurity agent implements or makes calls to the one or more sequence processing models, the cybersecurity agent is configured to provide at least a portion of the structured description of analysis principles and policies as conditioning data for the one or more sequence processing models.

Another example aspect is directed to a computer-implemented method, comprising: receiving, by a computing system comprising one or more processors, data descriptive of a cybersecurity event; instantiating, by the computing system, a multi-agent cybersecurity operations framework comprising a plurality of cybersecurity agents, wherein each of the plurality of cybersecurity agents is configured to implement or make calls to one or more sequence processing models when performing its respective task or workflow; executing, by the computing system, a multi-stage pipeline that includes interactive communications between the plurality of cybersecurity agents to autonomously generate an output of the agentic framework; and performing, by the computing system, one or more automated alert or remediation actions based on the output of the agentic framework.

In some implementations, the multi-stage pipeline comprising a deterministic analysis stage in which one or more of the cybersecurity agents operate to: receive an event; extract one or more entity types from the event; and retrieve supplemental information about the one or more entity types from one or more knowledge stores. In some implementations, the multi-stage pipeline comprising an plan-and-execute stage in which one or more of the cybersecurity agents operate to perform a chain-of-thought planning step to generate a series of agent tasks. In some implementations, the multi-stage pipeline comprising a ReAct stage in which one or more of the cybersecurity agents operate to dynamically explore context of the event and seek out information to support possible hypotheses using one or more analyses from earlier investigation phases. In some implementations, the multi-stage pipeline comprising a final decision stage in which one or more of the cybersecurity agents operate to select one or both of: an escalation outcome and a remediation action. In some implementations, the method further includes assigning, by the computing system, a unique event identifier to the cybersecurity event; and maintaining, by the computing system, in a system memory indexed according to the unique event identifier, stateful representations of the interactive communications between the plurality of cybersecurity agents.

Other example aspects of the present disclosure are directed to other systems, methods, apparatuses, tangible non-transitory computer-readable media, and devices for performing functions described herein. These and other features, aspects, and advantages of various implementations will become better understood with reference to the following description and appended claims. The accompanying drawings, which are incorporated in and constitute a part of this specification, illustrate implementations of the present disclosure and, together with the description, help explain the related principles.

### BRIEF DESCRIPTION OF THE DRAWINGS

Figure 1 depicts a block diagram of an example cybersecurity platform according to example implementations of example aspects of the present disclosure.
Figure 2 depicts a block diagram of an example cybersecurity agent according to example implementations of example aspects of the present disclosure.
Figures 3A and 3B depict graphical diagrams of example structured descriptions according to example implementations of example aspects of the present disclosure.
Figure 4 depicts a block diagram of an example multi-agent cybersecurity platform according to example implementations of example aspects of the present disclosure.
Figure 5 depicts graphical diagrams of different example agent interaction styles according to example implementations of example aspects of the present disclosure.
Figure 6 depicts a block diagram of an example multi-agent interaction according to example implementations of example aspects of the present disclosure.
Figure 7A depicts a block diagram of an example instance of a human user updating a memory system according to example implementations of example aspects of the present disclosure.
Figure 7B depicts a block diagram of an example instance of an agent updating an investigative state repository according to example implementations of example aspects of the present disclosure.
Figure 8 depicts a block diagram of example instances of agents updating an environmental state repository according to example implementations of example aspects of the present disclosure.
Figure 9 depicts a block diagram of an example agent retrieval loop according to example implementations of example aspects of the present disclosure.
Figure 10 is a flow chart diagram illustrating an example method for training a machine-learned model according to example implementations of aspects of the present disclosure;
Figure 11 is a block diagram of an example processing flow for using machine-learned model(s) to process input(s) to generate output(s) according to example implementations of aspects of the present disclosure;
Figure 12 is a block diagram of an example sequence processing model according to example implementations of aspects of the present disclosure;
Figure 13 is a block diagram of an example technique for populating an example input sequence for processing by a sequence processing model according to example implementations of aspects of the present disclosure;
Figure 14 is a block diagram of an example model development platform according to example implementations of aspects of the present disclosure;
Figure 15 is a block diagram of an example training workflow for training a machine-learned model according to example implementations of aspects of the present disclosure;
Figure 16 is a block diagram of an inference system for operating one or more machine-learned model(s) to perform inference according to example implementations of aspects of the present disclosure;
Figure 17 is a block diagram of an example networked computing system according to example implementations of aspects of the present disclosure;
Figure 18 is a block diagram of an example computing device according to example implementations of aspects of the present disclosure; and
Figure 19 is a block diagram of an example computing device according to example implementations of aspects of the present disclosure.

### DETAILED DESCRIPTION

Cybersecurity operations ("SecOps") can include various approaches that integrate security measures and processes with information technology operations to improve resilience to and perform operations responsive to cybersecurity threats. Traditional methods of cybersecurity operations often rely heavily on human analysts, who are limited in number and can be overwhelmed by the high volume of alerts generated by modern cybersecurity infrastructure. This limitation leaves organizations vulnerable to ongoing breaches.

In view of the above challenge, example aspects of the present disclosure are directed to computing systems and methods which include or leverage coordinated artificial intelligence agents (hereinafter "agents") for autonomous cybersecurity operations. An "artificial intelligence" agent can leverage one or more machine-learned models and/or deterministic rules to perform operations that would typically be attributable to or performed by a human. In particular, example aspects of the present disclosure implement a multi-agent cybersecurity operations platform or framework that can autonomously perform investigation and triage of cybersecurity events, thereby augmenting the capacity of security operations centers (SOCs).

Some example implementations of the present disclosure utilize a plurality of cybersecurity agents. Each cybersecurity agent can include or have access to a various machine-learned models such as a sequence processing model (e.g., a large language model, a large multimodal model, or similar). Further, each cybersecurity agent can include or leverage a structured description of analysis principles and policies for a respective task or workflow.

The agents can interoperate autonomously to manage cybersecurity events across one or more computer networks. For instance, the agents can include an orchestration agent and various sub-agents, each capable of implementing or making calls to sequence processing models to perform their tasks effectively. For example, the agents can leverage their related machine-learned models to generate content (e.g., textual content) that can be transmitted between the agents for respective processing (e.g., in the form of a multi-agent textual conversation or analysis). For example, in some implementations, one or more of the agents can generate structured content (e.g., JSON-structured content, or similar), which can be useful for passing structured information between agent(s). One example of a structured output is as follows:

```
 {
 "determination": "MALICIOUS",
 "explanation": "...",
 }
```

One significant advantage of the disclosed technology is its modular, multi-stage pipeline. This pipeline can include stages such as deterministic analysis, plan-and-execute, ReAct, and final decision. Each stage allows the agent(s) to progressively refine their investigation and triage actions based on the evolving context of the cybersecurity event. For example, in the deterministic analysis stage, agents can extract entity types from an event and retrieve supplemental information about these entities from knowledge stores.

According to another aspect of the present disclosure, example systems can enhance the consistency and quality of cybersecurity operations by including, maintaining, and/or leveraging an investigative state repository and/or an environmental state repository. These repositories store previous analysis outcomes and indexed entities, respectively, which can be leveraged by the agents for retrieval-augmented generation during their operations. Specifically, the content stored in the repositories can represent previous outcomes or other general knowledge that is useful by the agents in analyzing a current scenario or event. For example, information about past outcomes may facilitate the agent in understanding the severity and/or consequences of current threats and/or possible remediating actions. Thus, the repositories allow the agents to access a rich context, improving their decision-making processes and adaptability to various cybersecurity scenarios.

Thus, the present disclosure provides a flexible, scalable, and intelligent solution to manage and respond to cybersecurity events, significantly reducing the reliance on human analysts and improving the overall security posture of organizations.

More particularly, a computing system can implement a multi-agent cybersecurity operations framework. This framework can comprise a variety of cybersecurity agents, each designed to perform specific functions within the cybersecurity operations. For example, some agents might be specialized in initial threat detection, while others could focus on deeper analysis or remediation tasks. As another example, some agents may specialize in analyzing particular types of threat intelligence data (e.g., IOCs), while other agents may be configured to analyze specific aspects of the alert telemetry (e.g., command line invocations). The diversity of agents within the framework allows for a comprehensive approach to cybersecurity, where different aspects of security management are handled by specialized agents.

In some implementations, each cybersecurity agent within the multi-agent framework can be equipped with a structured description of analysis principles and policies tailored to the specific tasks or workflows it performs. This structured description can serve as a guideline for the agent, outlining the steps and considerations necessary to analyze and respond to cybersecurity events effectively. For instance, an agent responsible for network traffic analysis might have principles focusing on anomaly detection and policies detailing how to handle detected anomalies, such as when to escalate an alert. Another agent, tasked with malware analysis, might operate under principles that guide the dissection of potential malware and policies that determine the circumstances under which a quarantine action is initiated. These structured descriptions ensure that each agent operates within a defined scope and methodology, enhancing the consistency and reliability of the cybersecurity operations.

In general, a structured description of analysis principles and policies refers to a systematically-organized outline that delineates the foundational guidelines and procedural rules which cybersecurity agents follow when addressing security threats. This structured description can serve as a blueprint guiding the agents in the execution of their designated tasks, ensuring they operate within predetermined parameters to maintain consistency and reliability in their responses. For example, an agent tasked with network surveillance might operate under principles that prioritize the detection of unusual data transmissions and policies that dictate specific response actions once such transmissions are identified. This ensures that all agents adhere to a unified strategy, enhancing the overall effectiveness of the cybersecurity operations.

In the context of the multi-agent cybersecurity operations framework, each agent possesses its unique structured description tailored to its specific role within the system. This allows for specialization in handling different aspects of cybersecurity threats while maintaining a cohesive operational approach across the system. For instance, one agent might focus on initial threat detection employing principles of rapid identification, while another might handle threat analysis, guided by principles of thorough data examination and detailed policy on data handling and privacy. This segmentation of roles under a unified structured description framework ensures that each agent can perform optimally within its scope, contributing to a robust and efficient collective defense mechanism against cyber threats.

The structured description of analysis principles and policies within each cybersecurity agent can be organized in a hierarchical manner to enhance executability, clarity, and/or manageability. For example, at the top level, broad principles can define the overarching goals and priorities of the agent, such as maintaining data integrity or ensuring rapid response times. In addition, the respective structured description of analysis principles and policies for each specific agent can be specifically crafted for the role that specific agent performs. For example, high level agents can focus on the broad flow of analysis and final decision making, versus sub-agents that consider more specialized tasks, etc.

Subsequently, these principles can be broken down into more specific policies that provide detailed procedures and protocols. For example, a principle aimed at rapid response might include policies that specify maximum allowable response times for different types of threats, protocols for automatic escalation when these times are exceeded, and guidelines for synchronous communication with other agents to coordinate an expedient collective response. This hierarchical structuring not only facilitates easier navigation and understanding of the guidelines but also simplifies updates and modifications as new threats emerge or operational strategies evolve. Furthermore, hierarchical structuring also makes the investigations more scalable. High-density information can remain at lower levels of the hierarchy and only relevant outcomes can be percolated upwards.

In some implementations, the structured description within the cybersecurity agents may include algorithmic flowcharts or tree-based structures to guide decision-making processes. For instance, a flowchart could structurally represent the step-by-step actions an agent takes when a potential threat is detected, starting from initial assessment to final resolution, including decision nodes where different paths are taken based on specific threat characteristics. Similarly, a tree-based structure, such as a knowledge tree, might be used to categorize and prioritize threat types, helping agents quickly navigate through layers of information to determine the appropriate protocols for response based on the severity and type of the detected threat. These visual and organizational tools embedded within the structured descriptions aid agents in executing their tasks efficiently and accurately.

In some implementations, each of the plurality of cybersecurity agents can be configured to implement or make calls to one or more sequence processing models when performing its respective task or workflow. Example sequence processing models include so-called large language models, large multimodal models, or other large or "foundational" models. As one example, a sequence processing model can include a foundational cybersecurity model that has been trained on large amounts of diverse cybersecurity information to instill foundational cybersecurity knowledge within the model. As one example, example generative sequence processing models for cybersecurity are described in International Application PCT/US2024/044202, published as WO2025049586, which is hereby incorporated by reference in its entirety.

These sequence processing models can analyze complex data sequences and make predictions or decisions based on learned patterns from vast amounts of data. For example, a cybersecurity agent tasked with detecting phishing attempts might utilize a sequence processing model trained to recognize linguistic and formatting cues commonly found in phishing emails. Similarly, another agent responsible for network anomaly detection could employ a model that analyzes traffic patterns and flags deviations that may indicate a security breach.

In some implementations, when each cybersecurity agent implements or makes calls to one or more sequence processing models, the agent is configured to provide at least a portion of the structured description of analysis principles and policies as conditioning data for the sequence processing model(s). This conditioning controls the models to tailor their processing and decision-making to align with the specific guidelines and objectives outlined in the principles and policies. For example, if an agent is dealing with data related to network traffic analysis, it can condition the sequence processing model on policies that emphasize particular types of traffic patterns or anomalies to prioritize, enhancing the model's relevance and accuracy in real-time threat detection scenarios. This capability ensures that the outputs from the sequence processing models are not only based on learned data patterns but are also enriched by the strategic goals and operational protocols defined within the structured description of analysis principles and policies.

In some implementations, the multi-agent cybersecurity operations framework can include an orchestration agent along with a plurality of sub-agents. The orchestration agent can coordinate and manage the activities of the sub-agents, ensuring that each sub-agent performs its designated tasks in a timely and efficient manner. For example, in a scenario involving a detected network intrusion, the orchestration agent might direct specific sub-agents to analyze the intrusion's source, another to assess the impact, and yet another to implement containment measures. This division of labor among the sub-agents, guided by the orchestration agent, can enhance the overall consistency and effectiveness of the cybersecurity operations autonomously performed by the framework.

In some implementations, one or more of the plurality of cybersecurity agents within the framework are designed as stateful processes that maintain a dynamic state. This means that these agents can retain information over time and use this accumulated data to inform their current and future actions. For example, an agent tasked with monitoring network traffic might maintain a state that includes data accumulated during one or more ongoing analyses, allowing it to quickly continue from a most recent checkpoint in each ongoing analysis. Similarly, an agent responsible for intrusion detection could use its maintained state to remember past intrusion attempts and use this information to enhance its detection algorithms, potentially recognizing sophisticated attacks that evolve over time. This capability for state retention enables the agents to adapt and respond more effectively to complex and dynamic cybersecurity threats. Furthermore, another benefit of statefulness is reliability. Having agents and/or corresponding communications between agents as stateful processes means that if one specific agent fails, the investigation can easily be restarted from a certain checkpoint (e.g., a stateful point prior to joining of the failed agent and/or at the point of failure of the failed agent).

In some implementations, one or more of the plurality of cybersecurity agents within the system are configured to perform tool use with respect to one or more tools. This configuration allows these agents to interact with and utilize various cybersecurity tools to enhance their capabilities in monitoring, detecting, and responding to threats. For instance, an agent might use a vulnerability scanning tool to assess the security posture of networked devices, or it might employ a forensic analysis tool to investigate the details of a security breach. The ability to leverage such tools can significantly extend the functionality of the agents, enabling them to execute complex tasks that require specialized capabilities beyond their inherent functionalities. This integration of tool use not only improves the efficiency of the agents but also enhances the overall effectiveness of the cybersecurity operations. For example, the output of these tools can be provided to the sequence processing model(s) along with the structured description of analysis principles and policies to enable the sequence processing model(s) to analyze the results in the context of the ultimate goal of the agent.

In some implementations, the plurality of cybersecurity agents are configured to operate in a multi-stage pipeline that includes a deterministic analysis stage. During this stage, one or more of the cybersecurity agents can receive a cybersecurity event, extract one or more entity types from the event, and retrieve supplemental information about these entity types from one or more knowledge stores. A cybersecurity event can include any occurrence within a digital system that deviates from the expected or authorized behavior, potentially indicating a security risk or breach, and can range from simple alerts to full-blown incidents. For example, upon receiving an alert about a suspicious network activity, an agent might extract entities such as IP addresses or domain names involved in the activity. Subsequently, the agent could access various threat intelligence databases to gather additional information about the reputation of these IP addresses or the historical security incidents associated with the domain names. Alternatively or additionally, the agent could perform some context gathering from recent security events within the environment (e.g., without necessarily being tied to the IOCs extracted from the originating event/alert). This process helps in enriching the context of the event, enabling more informed and accurate decision-making in subsequent stages of the pipeline.

In some implementations, following the deterministic analysis stage, the multi-stage pipeline includes a plan-and-execute stage. In this stage, one or more of the cybersecurity agents can perform a chain-of-thought planning step to generate a series of tasks that the agents will undertake. For example, after identifying and gathering data about an entity such as a suspicious Internet Protocol (IP) address, the same or a different agent might plan tasks such as deeper investigation into the IP's historical activity, cross-referencing against recent security breaches, and checking for any related anomalies in network traffic. This structured approach allows the agent(s) to systematically address the components of the security event. Furthermore, in some implementations, the plan-and-execute stage can be repeated an arbitrary number of times factoring in the stages of the previous runs.

In some implementations, the pipeline progresses to a ReAct stage after the plan-and-execute stage. During the ReAct stage, the agent(s) can dynamically explore the context of the event to seek out additional information that supports or refutes the formulated hypotheses based on analyses from earlier stages. For instance, if the hypothesis involves a potential malware spread from the suspicious IP address, the agent might look for patterns of similar malware signatures within the network or attempt to trace the communication between the IP and known bad actors. This stage is beneficial for adapting the investigation as new data becomes available.

In some implementations, a next stage of the multi-stage pipeline is the decision stage. Here, one or more of the cybersecurity agents evaluate all the gathered and analyzed information to make a final decision regarding the security event. This decision could involve escalating the issue to human analysts for further action or initiating automated remediation measures if the threat level and confidence of the analysis warrant it. For example, if the analysis confirms a high-confidence threat, the agent might automatically isolate affected systems to prevent further damage while alerting cybersecurity personnel.

In some implementations, the computing system is configured to assign a unique event identifier to each cybersecurity event that is investigated by the multi-agent framework. This unique identifier can serve as a consistent reference for all activities and analyses related to that specific event. For example, when a cybersecurity threat such as a suspected data breach is detected, the system generates a unique identifier for this incident. This identifier is then used to track all subsequent investigations, actions, and interactions by the agents concerning this event, ensuring that all related activities are easily retrievable and distinctly separated from other events.

In some implementations, the computing system maintains stateful representations of multi-agent interactions in the system memory. For example, these stateful representations can be indexed according to the unique event identifier(s) described above. Thus, in some implementations, for each identified event, a comprehensive record of all agent activities and their interactions can be kept. For instance, if multiple agents are involved in analyzing different aspects of the same security threat, their findings, decisions, and actions are all logged under the event's unique identifier. This organized data structure allows for efficient data retrieval and aids in comprehensive event analysis and review.

In some implementations, the use of unique event identifiers and indexed stateful representations enhances the capability of the cybersecurity system to handle concurrent events. Each event being processed independently allows the system to scale effectively, managing multiple incidents simultaneously without data confusion or overlap. This is particularly beneficial in environments with high volumes of security events, such as large corporate networks or managed security service providers.

In some implementations, the structured approach to data management not only facilitates the immediate response to cybersecurity threats but also supports long-term data analysis and system learning. By maintaining detailed records of each event and the associated agent interactions, the system can use this historical data to improve threat detection and response strategies over time. For example, machine learning algorithms can analyze past events to identify patterns or anomalies that could predict or prevent future incidents.

In particular, in some implementations, the multi-agent framework can include, access, or otherwise leverage an investigative state repository that stores previous analysis traces or outcomes associated with cybersecurity events previously investigated by the multi-agent framework. This repository acts as a historical database where details of past investigations, including the steps taken, decisions made, and outcomes achieved, are preserved. For example, if a particular type of malware attack was successfully mitigated, the specific analysis and actions taken by the agents are stored. This historical data can be extremely valuable for reviewing past security incidents and for training purposes, where agents can learn from previous experiences.

In some implementations, at least one of the plurality of different agents is configured to perform retrieval-augmented-generation with respect to the investigative state repository. This means that agents can access and utilize stored historical data to inform their current operations. For instance, when a new threat is detected, an agent can retrieve information on similar past incidents to quickly understand potential vulnerabilities and effective countermeasures, thereby accelerating the response time and improving the accuracy of threat handling.

In some implementations, the multi-agent framework can include, access, or otherwise leverage an environmental state repository that stores a set of indexed entities and associated information. This repository can contain detailed records of the network environment, including the characteristics and security postures of various assets such as servers, workstations, and network devices. This data is beneficial for understanding the context of security events and for tailoring the response to the specific attributes of the affected assets.

In some implementations, at least one of the plurality of different agents is configured to perform retrieval-augmented-generation with respect to the environmental state repository. This configuration allows agents to dynamically pull relevant environmental data during an investigation. For example, if an anomaly is detected on a particular device, an agent can immediately access detailed information about the device from the environmental state repository, such as its operating system, installed applications, and historical security incidents, to more effectively assess the threat and decide on the appropriate actions. Additionally or alternatively, the agent could access information about the device's role or services it offers in the environment. This capability ensures that each response is not only rapid but also contextually aware and precisely targeted.

According to another aspect of the present disclosure, in some implementations, one or more of the sequence processing models can be finetuned or otherwise trained upon the data contained in the investigative state repository and/or the environmental state repository. Training the model(s) on this knowledge can improve the performance of the model(s) on the individual agent tasks and/or generally improve the world knowledge of the model(s). As one example, finetuning a sequence processing model on the data contained in the investigative state repository and/or the environmental state repository can include inputting some subset of the data into the sequence processing model and training the sequence processing model to predict some other, different subset of the data. For example, the model can be trained to predict outcomes (e.g., real-world observed outcomes) from various previous events or actions. As another example, the model can be trained to predict certain environmental data given a prompt about an environment.

The systems and methods of the present disclosure provide a number of technical effects and benefits. As one example technical effect and benefit, the proposed techniques enhance the efficiency and efficacy of cybersecurity systems by automating the process of security event analysis and response. This automation is achieved through a multi-agent framework that processes and responds to security alerts without human intervention. The framework directly interacts with the hardware and software components of a network to perform real-time data analysis and execute security protocols. This significantly decreases the response time to potential threats, thereby improving the overall cybersecurity posture of the network system.

As another example technical effect and benefit, the technology's capability to maintain and utilize a stateful representation(s) of multi-agent interactions and an indexed repository of environmental and investigative states allows the system to not only react to current threats but also to learn from past events. This learning mechanism can include the storage, retrieval, and processing of large volumes of data to dynamically improve the system's performance over time. This approach provides a technical solution to the problem of adapting cybersecurity defenses to evolving threats, which is a challenge deeply rooted in the technical domain of cybersecurity management.

As another example technical effect and benefit, the proposed use of structured descriptions of analysis principles and policies within cybersecurity agents significantly diverges from generic prompting of models by offering enhanced explainability, controllability, and systematic updatability. Unlike generic models that operate based on broad inputs with minimal contextual tailoring, this structured method ensures that each agent's actions are traceable back to specific, documented guidelines and policies. This traceability increases the explainability of the system's decisions and also the ability to pinpoint the location in the principles at which edits or updates would advantageously reduce false positives/negatives or other errors in processing. Furthermore, the hierarchical and detailed nature of the structured descriptions allows for precise control over agent behavior, ensuring that operations adhere to organizational security protocols. This structured framework also facilitates more disciplined updates, as modifications to principles or policies can be systematically implemented at various levels of the hierarchy without disrupting the overall integrity of the operational guidelines.

As another example of technical effect and benefit, the modular design of the framework and also the structured description of analysis principles and policies greatly enhances the ease of debugging and error correction within the cybersecurity framework. Each agent, operating independently with its own set of guidelines, can be individually tested for performance and accuracy. This isolation of components allows for pinpointing specific issues or inefficiencies without the interference of other operational elements, streamlining the troubleshooting process. Additionally, the independence of each agent facilitates targeted updates, enabling quick adaptations to individual agent protocols or principles without necessitating a comprehensive overhaul of the entire system. This modular approach reduces downtime during maintenance.

Various example implementations are described herein with respect to the accompanying Figures.

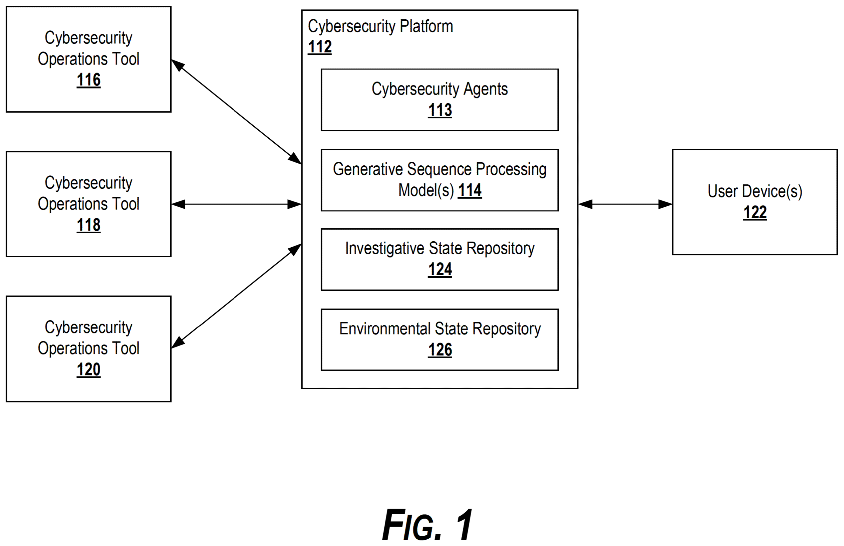

Figure 1 provides a block diagram of an example cybersecurity platform 112. The cybersecurity platform 112 can include various components such as cybersecurity agents 113, generative sequence processing model(s) 114, an investigative state repository 124, and an environmental state repository 126.

The cybersecurity platform 112 can be configured for enhancing security within various networked computer environments, such as cloud-based environments. The cybersecurity agents 113 can be software-based processes that perform specific security functions such as monitoring, detecting, analyzing, and/or responding to potential cybersecurity threats. These agents 113 can operate autonomously or in coordination with other agents within the platform 112. Example agents 113 are described in additional detail elsewhere herein.

The generative sequence processing model(s) 114 can be machine learning models that are capable of analyzing complex data sequences to identify patterns, anomalies, potential security threats, and/or other cybersecurity data. These models 114 can be neural networks, and they can be trained on a variety of data types to enhance their predictive capabilities, as described in further detail below.

The investigative state repository 124 is a storage component that can hold data related to past cybersecurity events and analyses. This repository 124 can be used to store outcomes, decisions, and/or other relevant data from previous investigations carried out by the cybersecurity agents 113. The data stored in the investigative state repository 124 can be utilized (e.g., in the form of retrieval-augmented-generation) to inform and improve future security operations.

The environmental state repository 126 is a storage component that can hold contextual information about the operating environment in which the cybersecurity platform 112 is deployed. This repository 126 can include data on network configurations, device profiles, user activities, and/or other relevant environmental attributes. This information can be utilized (e.g., in the form of retrieval-augmented-generation) for the cybersecurity agents 113 to effectively assess and respond to security incidents.

The sequence processing model 114 can be one model or multiple models. The model(s) 114 can be configured for the analysis and generation of sequential data. Specifically, a sequence processing model 114 can include a sequence-to-sequence design that enables the model to receive and process a sequence of input data to produce a corresponding sequence of output data.

The sequence processing model 114 can include or leverage different model architectures. While some examples can utilize the Transformer architecture, others can be implemented using diverse architectures such as recurrent neural networks, convolutional neural networks, or even potential hybrid models.

One example form of a sequence processing model 114 is a so-called "large language model" (LLM). The term LLM can refer to a highly-parameterized model that is configured to interpret and generate text with human-like patterns. Through extensive pretraining on extensive datasets, LLMs are capable of addressing a multitude of natural language processing tasks, from text generation to intricate question-response mechanisms. Another example sequence processing model 114 is a "large multimodal model" (LMM).

In particular, in some implementations, the sequence processing model 114 can be initially pretrained on a large amount of pretraining data. Pretraining serves as an important phase in the development of an effective sequence processing model 114. During this phase, the model is exposed to extensive datasets, enabling it to establish a generalized understanding of data patterns, structures, and inherent relationships. The purpose of pretraining is to embed a wide spectrum of knowledge within the model, setting up a foundational framework of cognition.

In some implementations, the pretraining of the model 114 can include pretraining the model 114 on various forms of cybersecurity data. Including a broad spectrum of cybersecurity data during the pretraining phase can contribute to the later success of the model 114 on a range of different cybersecurity-related tasks. In some implementations, the pretraining can be split into multiple sequential phases. In an initial phase, the model 114 can be pretrained on data across many different domains (e.g., including computer languages) at a massive scale so as to instill foundational language knowledge and build the overall language capabilities of the model 114. In a subsequent or "continued" phase of pretraining, the focus of the pretraining can shift to include relatively larger volumes or ratios of data that is specific to the cybersecurity domain. Thus, the subsequent phase can include more focused pretraining that includes a much higher proportion and diversity of cybersecurity-specific data, thereby enabling the model 114 to begin to specialize at learning cybersecurity information.

According to an aspect of the present disclosure, subsequent to the comprehensive learning offered by pretraining, in some implementations, the sequence processing model 114 can undergo a finetuning process using a wide range of cybersecurity data and associated pretraining tasks. This finetuning stage focuses on enhancing and refining the model's capabilities within specific cybersecurity domains or tasks. By utilizing targeted cybersecurity datasets, which may emphasize certain cybersecurity-specific knowledge or patterns, the model's internal parameters are adjusted to optimize its performance on the designated cybersecurity tasks.

The cybersecurity platform 112 is in communication with cybersecurity operations tools 116, 118, and 120. The cybersecurity operations tools 116, 118, and 120 can be various systems that are deployed by an organization to perform cybersecurity tasks such as threat detection and prevention. Each of the cybersecurity operations tools 116, 118, and 120 can generate cybersecurity data that can be obtained by the cybersecurity platform 112 and processed by the agent(s) 113 and/or sequence processing model(s) 114. The cybersecurity platform 112 can be directly integrated with the cybersecurity operations tools 116, 118, and 120 and/or can communicate with the cybersecurity operations tools 116, 118, and 120 via an application programming interface (API).

As examples, the cybersecurity operations tools 116, 118, and 120 can be Security Orchestration, Automation, and Response (SOAR) platforms, Security Information and Event Management (SIEM) systems, Intrusion Detection Systems (IDS), Intrusion Prevention Systems (IPS), antivirus software, endpoint protection, vulnerability management tools, and/or others. Each of these tools 116, 118, and 120 can create various forms of cybersecurity data that can be communicated to the cybersecurity platform 112 (e.g., in real time, upon request, and/or periodically).

Thus, as one example, the cybersecurity platform 112 can be operatively integrated with a SOAR system. A SOAR system can include an integrated suite of technologies that serves as a comprehensive solution for managing, analyzing, and responding to an array of cybersecurity incidents and threats. It can incorporate an assortment of functionalities including but not limited to threat and vulnerability management, incident response, and security automation. The SOAR system can be designed to integrate with a multitude of security tools and platforms, enabling a more coherent and unified security infrastructure.

Key functionalities of the SOAR system can include: threat and vulnerability management; incident response; case management; dashboards and reporting; and the creation and deployment of automated playbooks. SOAR playbooks can include automated workflows or structured sequences of tasks within the SOAR system. These playbooks can automate the response to specific cybersecurity incidents or scenarios, integrating various tools, systems, and processes.

As another example, the cybersecurity platform 112 can be operatively integrated with a SIEM system. A SIEM system is a comprehensive solution in the cybersecurity domain that provides real-time analysis of security alerts generated by various hardware and software infrastructures in an organization. Key functionalities of the SIEM system can include data aggregation; log storage; event correlation; alerting; data analysis and visualization; forensics and analysis; and compliance reporting. While SIEM focuses on the detection and alerting aspects, SOAR platforms emphasize automation, orchestration, and response. In many mature security operations centers (SOCs), SIEM and SOAR solutions work hand-in-hand to provide an end-to-end security incident detection and response framework.

As another example, the cybersecurity operations tools 116, 118, and 120 can include or provide cybersecurity blogs or information obtained therefrom. A cybersecurity blogs can include a digital publication or platform that disseminates information, insights, and analyses pertaining to various facets of cybersecurity. While primarily textual, these blogs may also incorporate multimedia elements, code snippets, or interactive demonstrations. They aim to enhance the understanding of emerging threats, mitigation techniques, and advancements in the field of information security, though the content and approach may vary across different sources.

As another example, the cybersecurity operations tools 116, 118, and 120 can include or provide signature-based detection files. Signature-based detection files are employed within cybersecurity operations tools to identify and possibly mitigate known threats based on predetermined patterns or "signatures." These signatures, which can encompass attributes like file hashes, string patterns, or behavioral traits, can be derived from prior analyses of malicious activities or entities. YARA detection rules, for instance, utilize patterns to scan and identify malware samples.

As another example, the cybersecurity operations tools 116, 118, and 120 can include virus or malware detection systems. These are systems that are designed to identify, isolate, and eliminate malicious software or "malware", such as viruses, worms, trojans, ransomware, etc. The system operates by analyzing system behavior, data patterns, and code to flag potential threats. These systems can also encompass the capability of automated response mechanisms that take immediate action upon malware detection, mitigating potential damages and minimizing system downtime. Furthermore, they may include components for generating comprehensive logs and reports for further analysis and proactive threat hunting, enhancing the overall cybersecurity posture of the entity using such a system.

As another example, the cybersecurity operations tools 116, 118, and 120 can include open source vulnerability analysis or information. These can include data or information relating to potential weaknesses or susceptibilities in open-source software or systems. Such information, often shared within the cyber community, aids in the discovery, mitigation, and prevention of exploits that could compromise system integrity or security.

As another example, the cybersecurity operations tools 116, 118, and 120 can include security code repositories. Security code repositories are dedicated storage spaces for codebases that have an emphasis on security. These repositories can include secure code snippets, libraries, or frameworks. In some implementations, the security code repositories can include examples of malware scripts. Malware scripts can be scripts or sequences of code intended to perform malicious activities on targeted systems. These scripts may encompass a range of functionalities, from data exfiltration and system disruption to privilege escalation.

As another example, the cybersecurity operations tools 116, 118, and 120 can include cybersecurity and software development frameworks. These frameworks provide structured, standardized methodologies for developing secure software and managing cybersecurity risk. As an example, the MITRE framework offers a comprehensive suite of tools, techniques, and best practices for tackling cybersecurity challenges across a variety of domains or sectors.

As another example, the cybersecurity operations tools 116, 118, and 120 can include or provide analyst reports. Analyst reports, in the broadest sense, refer to comprehensive documents prepared by skilled professionals who carry out detailed assessments of various aspects of a system, process, or entity. Analyst reports can include threat intelligence reports that provide information about emerging cyber threats and vulnerabilities, malware reverse engineering reports that dissect malicious software to understand its origin, behavior, and mitigation strategies, and incident response reports which detail the results of a breach investigation, shedding light on the cause, impact, and recommended remediation measures.

Thus, as one example, the cybersecurity operations tools 116, 118, and 120 can include threat intelligence reports, data, or other information. Threat intelligence is a term referring to the collation, analysis, and dissemination of information about potential or current cyber threats and attacks. Threat intelligence is a specialized sector of cybersecurity that employs a multitude of data gathering, processing, and analysis techniques to identify, track, and predict cybersecurity threats and vulnerabilities. It involves the systematic collection of information from a variety of sources, both internal and external, to provide comprehensive insights into the cyber threat landscape. This information can include, but is not limited to, details on threat actors, their tools, tactics, and procedures (TTPs), indicators of compromise (IOCs), and the nature and impact of previous cyberattacks.

As another example, the cybersecurity operations tools 116, 118, and 120 can include or provide product documentation. Product documentation can include a compilation of informational materials related to a particular software or hardware product. This documentation aims to provide users, administrators, or developers with guidance on installation, configuration, utilization, and troubleshooting of the said product.

The cybersecurity platform 112 can also communicate with one or more user devices 122. For example, the user devices 122 can be associated with human users. In one example, the human users can be analysts or administrators that are responsible for managing the information security of a computer network for which some or all of the cybersecurity operations tools 116, 118, and 120 are deployed. Stated differently, in some instances some or all of the cybersecurity operations tools 116, 118, and 120 can be tools that are specifically deployed with respect to a particular computer network or group of networks. In addition or alternatively, some or all of the cybersecurity operations tools 116, 118, and 120 can be generalized tools that are not dedicated to or for a particular computer network or group of networks and may be broadly accessible irrespective of a user's affiliation to a particular organization or network.

The cybersecurity platform 112 can communicate with one or more user devices 122 to receive questions or queries from the user devices 122. The platform 112 can deploy the sequence processing model 114 to generate responses to the queries, based on processing of cybersecurity data by the sequence processing model 114. For example, the sequence processing model 114 can retrieve (e.g., via application programming interfaces) the relevant information necessary to answer the query from the cybersecurity operations tools 116, 118, and 120. The sequence processing model 114 can then process the retrieved information to generate an appropriate response to the query, which may for example be a summary, an extraction, a classification, a suggested remediation, or other output. This information can then be supplied to the user devices 122 for display to the user.

User device(s) 122 can be any type of electronic device used by individuals or organizations, such as computers, smartphones, or tablets. The interaction between the user device(s) 122 and the cybersecurity platform 112 can involve the exchange of information necessary for performing security operations and for providing security services to the users.

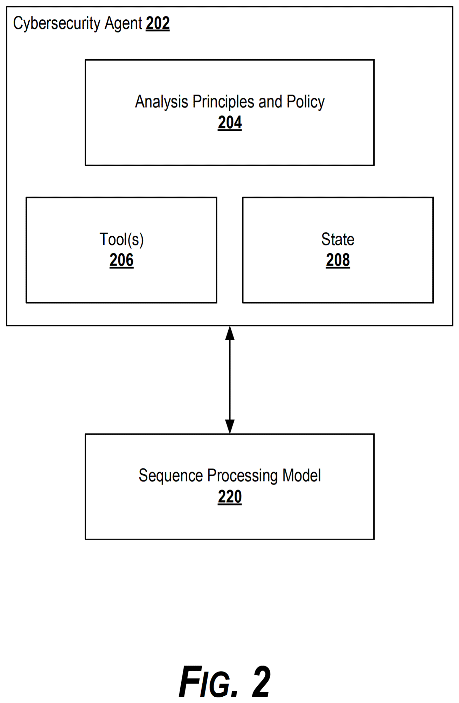

Figure 2 illustrates a block diagram of an example cybersecurity agent 202 according to example implementations of example aspects of the present disclosure. The cybersecurity agent 202 can include several components, each contributing to the functionality of the agent in managing cybersecurity events.

The cybersecurity agent 202 can include an Analysis Principles and Policy 204. This component can provide a structured description of analysis principles and policies that guide the cybersecurity agent 202 in its operations. The Analysis Principles and Policy 204 can be tailored to specific tasks or workflows that the cybersecurity agent 202 is designed to perform. For example, this could include guidelines for threat detection, data analysis procedures, or response strategies.

Included within (or accessible by) the cybersecurity agent 202 are tool(s) 206. The tool(s) 206 can comprise various software and/or hardware tools that the cybersecurity agent 202 utilizes to perform its functions. These tools can include, for example, network monitoring tools, malware analysis tools, or automated scripting tools. The tool(s) 206 can assist the cybersecurity agent 202 in executing the tasks defined by the Analysis Principles and Policy 204. As one example, the tool(s) 206 can include a web search tool or web search engine. As another example, the tool(s) 206 can include any of the tools 116, 118, or 120 described with reference to Figure 1.

Referring still to Figure 2, the cybersecurity agent 202 also includes (or may have access to) a state 208. The state 208 can represent a dynamic, maintained state of the cybersecurity agent 202 and/or other larger system or process that includes data accumulated over time. This data can be used to inform and enhance the performance of the cybersecurity agent 202 as it handles ongoing and new cybersecurity events. For instance, the state 208 can store information about previously encountered threats, ongoing analyses, or operational settings that adjust based on the cybersecurity environment.

Connected to the cybersecurity agent 202 is a sequence processing model 220. The sequence processing model 220 can be a machine learning model designed to process and analyze sequences of data. This model can make predictions or decisions based on learned patterns from vast amounts of data. The sequence processing model 220 can be utilized by the cybersecurity agent 202 to enhance its capabilities in detecting and responding to cybersecurity threats. The sequence processing model 220 can receive input from the cybersecurity agent 202, potentially conditioned by the Analysis Principles and Policy 204, to ensure that the outputs are aligned with the specific guidelines and objectives of the cybersecurity agent 202.

Although in Figure 2, the sequence processing model 220 is shown as external to the cybersecurity agent 202, this is simply illustrating one possible configuration. In other cases, the sequence processing model 220 may be included in or form a portion or component of the cybersecurity agent 202. In general, these two configurations generally correspond to the concept that the cybersecurity agent 202 includes or has access to the sequence processing model 220. Additionally, in some cases, the cybersecurity agent 202 can include or access multiple different models and/or can dynamically integrate different models.

The cybersecurity agent 202 as disclosed herein can be implemented using various types of technologies including software, hardware, firmware, or any combination thereof. In one embodiment, the cybersecurity agent can be realized as one or more sets of computer-executable instructions stored on a non-transitory computer-readable medium. These instructions are designed to be loaded into the memory of a computing device where they are executed by one or more processors to perform the functions ascribed to the cybersecurity agent. Such an implementation allows for flexible deployment across different computing environments and can be easily updated or modified to meet specific operational requirements or to respond to emerging cybersecurity threats.

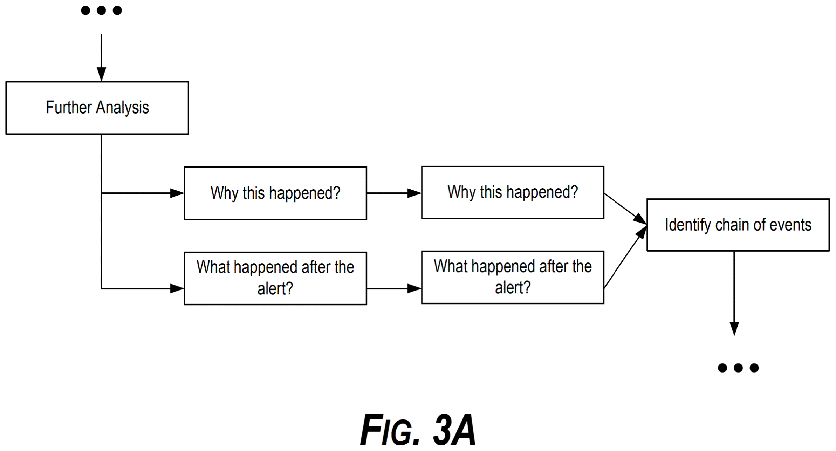

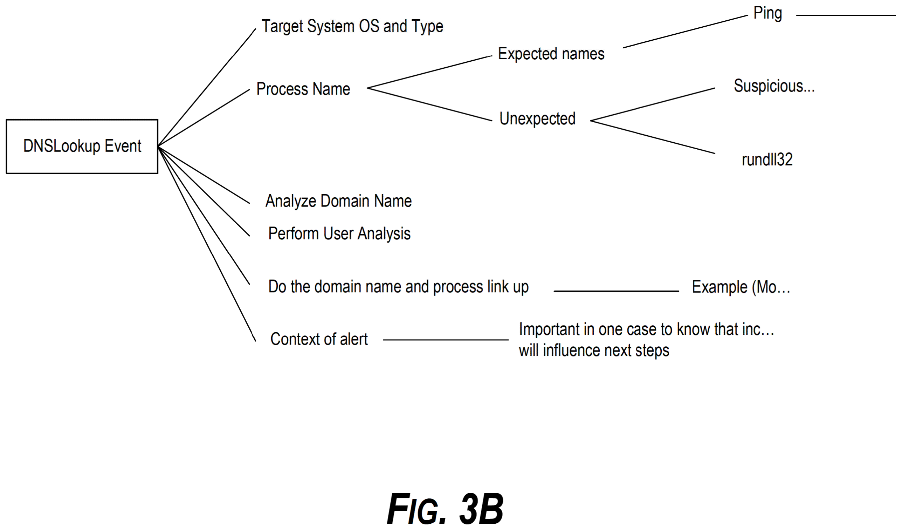

Figure 3A and Figure 3B depict graphical diagrams of example structured descriptions according to example implementations of example aspects of the present disclosure.

Figure 3A illustrates a flowchart that can be used to guide the analysis of cybersecurity events. The flowchart includes several decision nodes that represent potential questions or analysis paths that can be followed after a security alert is detected. The top node labeled "Further analysis" serves as an entry point into the decision-making process. From this node, three paths extend, each leading to a different analytical inquiry: "Why this happened?", "What happened after the alert?", and "Find events before the alert". Each of these paths further branches into more specific questions or directives such as "Identify chain of events", which is aimed at constructing a timeline or causality sequence of the events surrounding the alert.

Thus, Figure 3A illustrates an example structured description in which a flowchart is utilized to systematically navigate through the analysis of cybersecurity events. This structured approach provides several benefits. First, it assists the agent in performing a methodical progression through different analytical inquiries, reducing the likelihood of overlooking critical aspects of the event. By following predefined decision nodes and pathways, the agent is guided through a logical sequence of questions and checks, which can lead to a more comprehensive understanding of the event.

Furthermore, the use of a flowchart in the structured description aids in standardizing the analysis process across different incidents and analysts. This standardization helps maintain consistency in the response of the agentic system to security alerts, ensuring that all potential threats are evaluated according to the same rigorous criteria, regardless of which agent is performing the analysis.

Additionally, the flowchart allows for easier documentation and auditing of the decision-making process. Each decision point and subsequent pathway can be recorded, providing a transparent trail of the agentic analysis that can be reviewed for compliance with organizational policies or external regulations.

Moreover, the structured description with a flowchart enables more efficient troubleshooting and updating of the analysis process. As new types of cybersecurity threats emerge, the flowchart can be easily modified to include new decision nodes or pathways, allowing the organization to adapt the response strategies of the automated agents quickly and effectively.

Figure 3B presents another graphical diagram of an example structured description. The example structured description in Figure 3B focuses on the analysis of a specific type of cybersecurity event, labeled as "DNSLookup Event". This diagram outlines various attributes and actions associated with analyzing this type of event. At the center of the diagram, the "DNSLookup Event" node connects to multiple nodes that specify different aspects of the analysis.

Each node in the diagram of Figure 3B is connected by lines that provide a logical flow or sequence in which these analyses can be performed. Specifically, by delineating specific attributes and actions, such as "Target System OS and Type," "Process Name," "Analyze Domain Name," and "Perform User Analysis," the diagram serves as a conditioning tool that guides agents in a systematic exploration of each aspect of the event. This methodical breakdown helps ensure that the agent reviews all relevant details and enhances the accuracy of the analysis performed by the agent. The structured flow depicted in the diagram also allows for dynamic adaptation during investigations, enabling agents to prioritize and modify their actions based on real-time findings and emerging threat indicators.

The use of such structured descriptions in autonomous cybersecurity operations offers significant advantages including standardization, efficiency, and adaptability. Standardization across different agents and investigations is achieved by providing a consistent framework that all agents follow, reducing variability in the handling of similar security events and ensuring uniform quality in threat response. Efficiency is enhanced as agents can quickly navigate through the structured pathways, reducing the time to resolution and improving the overall response rate to incidents. Moreover, the diagram's format allows for easy updates and modifications.

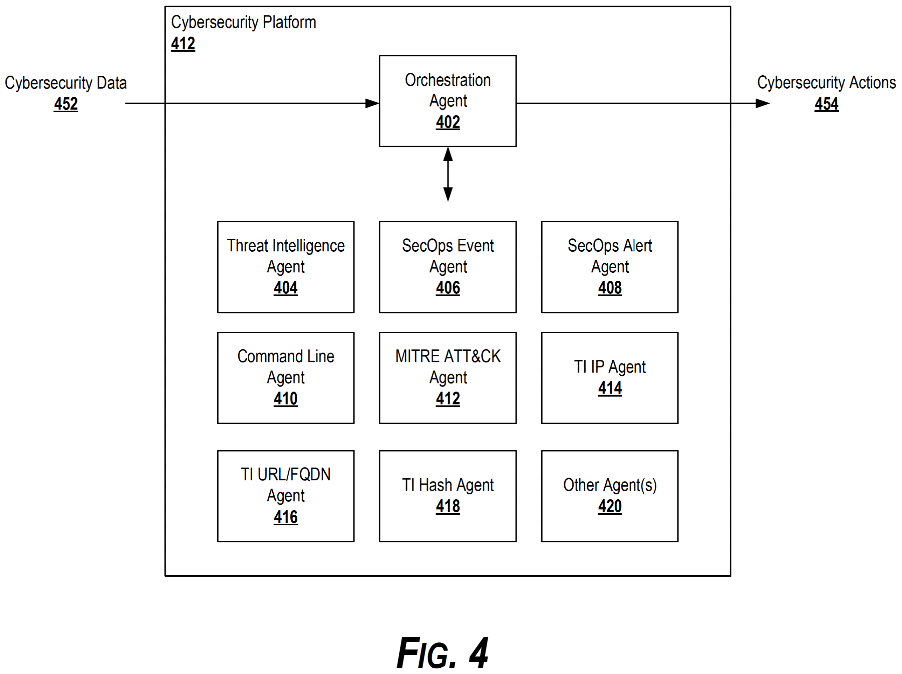

Figure 4 illustrates a block diagram of an example multi-agent cybersecurity platform 412 according to example implementations of example aspects of the present disclosure. The cybersecurity platform 412 can be configured to receive cybersecurity data 452 and output cybersecurity actions 454 based on the analysis and processing performed by various agents within the platform.

The example cybersecurity platform 412 can include an orchestration agent 402. The orchestration agent 402 can be responsible for coordinating the activities of the other agents within the platform. It can direct the flow of information between agents and ensure that the processes are executed in accordance with predefined workflows or security policies.

Connected to the orchestration agent 402 are multiple specialized agents, each designed to handle specific aspects of cybersecurity operations. These include the threat intelligence agent 404, the SecOps event agent 406, the SecOps alert agent 408, the command line agent 410, the MITRE ATT&CK agent 412, the TI IP agent 414, the TI URL/FQDN agent 416, the TI Hash agent 418, and other agent(s) 420.

The threat intelligence agent 404 can be configured to gather and analyze intelligence related to cybersecurity threats from various external sources. This agent can help in identifying potential threats by analyzing patterns or signatures that match known threat vectors.

The SecOps event agent 406 can be responsible for handling events within the security operations center. This agent can process and categorize events based on their severity and potential impact.

The SecOps alert agent 408 can be configured to manage alerts generated by the cybersecurity systems. This agent can prioritize alerts and escalate them based on predefined criteria.

The command line agent 410 can be designed to execute command line operations that are necessary for the management of cybersecurity tasks within the platform.

The MITRE ATT&CK agent 412 can utilize the MITRE ATT&CK framework to assess and develop strategies against known tactics, techniques, and procedures used by threat actors.

The TI IP agent 414 can specialize in the analysis of IP addresses related to threat intelligence, helping to identify potentially malicious sources of traffic.

The TI URL/FQDN agent 416 can focus on the analysis of URLs and Fully Qualified Domain Names to detect and respond to threats related to web-based attacks.

The TI Hash agent 418 can be responsible for analyzing file hashes to check for known malicious software or compromised files within the system.

Other agent(s) 420 can include additional specialized agents that can be incorporated into the cybersecurity platform 412 to address specific needs or emerging threats not covered by the predefined agents.

In some implementations, these agents can collectively work under the coordination of the orchestration agent 402 to process the incoming cybersecurity data 452, perform necessary analyses, and generate appropriate cybersecurity actions 454 to protect the network and its resources. In other cases, the agents can operate under or according to a peer-to-peer or decentralized workflow configuration.

As examples, the cybersecurity actions 454 generated by the multi-agent system in Figure 4 can include a variety of specific measures tailored to counteract identified threats effectively. For example, these actions can include automatically isolating affected network segments to prevent the spread of malware, deploying patches or updates to vulnerable systems, initiating password resets or blocking access for compromised user accounts, and/or configuring firewalls or intrusion detection systems to enhance defenses against detected threats.

As further examples, cybersecurity actions 454 can include generating and disseminating alerts to relevant stakeholders about ongoing security incidents, creating detailed incident reports for forensic analysis, and/or recommending strategic changes to cybersecurity policies or practices based on the insights gathered by the persona models.

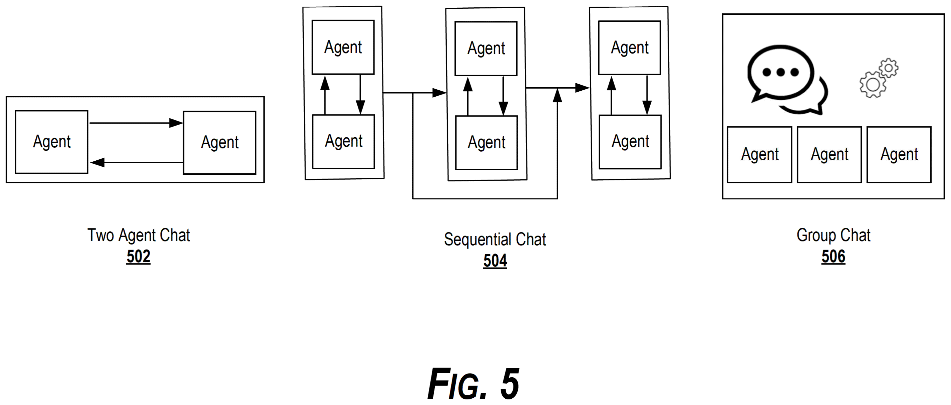

Figure 5 provides a graphical representation of various example agent interaction styles within a cybersecurity system. The figure illustrates three distinct models of example agent interactions, including two agent chat 502, sequential chat 504, and group chat 506. Each model depicts different configurations of agent interactions that can occur within a multi-agent cybersecurity operations framework.

Two agent chat 502 shows a simple interaction model where two agents communicate directly with each other. This type of interaction can be used for tasks where a direct exchange of information or commands between two agents is sufficient.

Sequential chat 504 illustrates a more complex interaction involving multiple agents where the communication flows in a sequential manner. In this model, the output of one agent can serve as the input for the subsequent agent, forming a chain of information processing. This type of interaction can be applicable in scenarios where a task needs to be processed in stages by different agents, each adding to or refining the information or analysis.

Group chat 506 depicts a scenario where multiple agents are involved in a collaborative interaction. This model can be beneficial in complex decision-making processes where inputs from multiple agents are needed to reach a conclusion or to generate a comprehensive analysis of a situation.

The agents represented in Figure 5 can include various types of cybersecurity agents such as detection agents, analysis agents, or response agents, each configured to perform specific functions within the cybersecurity operations framework. The interactions depicted can occur over one or more computer networks and can, in some implementations, be facilitated by an orchestration agent that manages the flow of information and tasks between the agents as part of a larger cybersecurity operations system. In other cases, the agents can operate under or according to a peer-to-peer or decentralized workflow configuration.

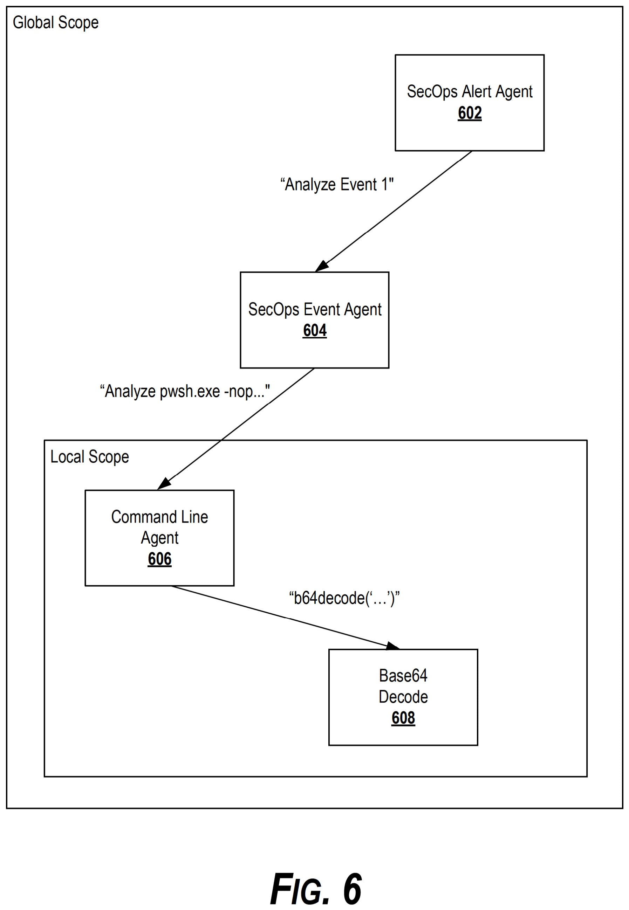

Figure 6 illustrates a schematic representation of example agent interactions within a cybersecurity operations framework. The diagram is divided into two main sections labeled as global scope and local scope, which can correspond to different levels of operational visibility and interaction scope within the system.

In the global scope, two agents are depicted: the SecOps alert agent 602 and the SecOps event agent 604. The SecOps alert agent 602 can be responsible for the initial detection and alerting of security events. An example interaction is shown where the SecOps alert agent 602 sends a command or data, labeled "analyze event 1", to the SecOps event agent 604. The SecOps event agent 604 can be tasked with further analysis and processing of the security event indicated by the SecOps alert agent 602.

Moving to the local scope, the diagram shows a more detailed interaction within a confined operational context. Within this scope, a command line agent 606 is shown, which can be responsible for executing specific command-line operations or scripts. An example command "b64decode(...)" Is depicted as being sent from the command line agent 606 to a base64 decode tool 608. The base64 decode tool 608 can be a functional unit or tool specifically designed to handle the decoding of data encoded in base64 format. The command line agent 606 is utilizing the base64 decode 608 to process or transform data as part of its operational task.

Thus, Figure 6 illustrates an example of hierarchical and scoped interaction of agents within a cybersecurity framework, where commands and data flow between different agents and tools according to different scopes of operation. In some implementations, these interactions can resemble Python function calling semantics and can include both global and local scopes to manage the visibility and reach of the operational commands within the system. In some implementations, a series of interactions can be referred to and/or stored as an execution trace or call graph.

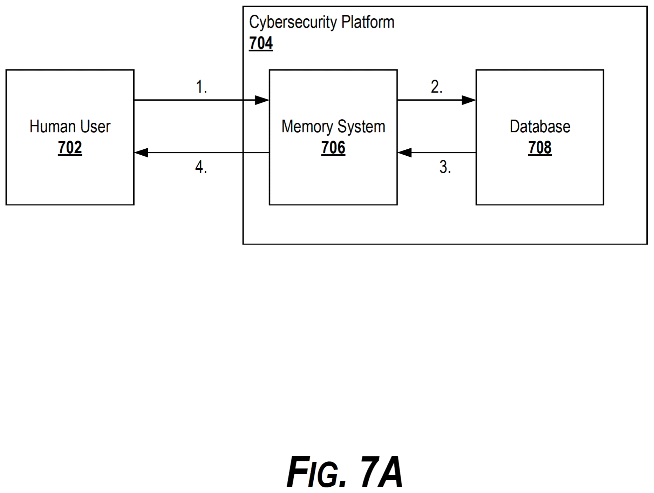

Figure 7A illustrates a diagram of a proposed memory update system within a cybersecurity platform 704, focusing on how a human user 702 can influence the memory system 706.

A human user 702 can interact directly with a memory system 706, as indicated by arrow 1. This interaction can include the human user 702 providing inputs or feedback to the memory system 706. For example, the human user 702 can mark specific actions performed by the cybersecurity platform 704 as exemplars of good behavior. Actions that are marked in this way can be saved for retrieval in the memory system 706. For example, these actions can be saved along with the contextual state that was available at the time the action was taken, potentially by embedding the prompt provided to the model and saving it along with the response (action) that the user liked.

The memory system 706 is connected to a database 708, as shown by arrows 2 and 3. Arrow 2 represents the transmission of data from the memory system 706 to the database 708. This data can include actions marked by the human user 702 along with the corresponding contextual states. Arrow 3 indicates that the memory system 706 can retrieve data from the database 708, which can be used to reference past examples when analyzing similar alerts in the future.

Finally, arrow 4 shows the feedback loop from the memory system 706 back to the human user 702. This feedback can be used to inform the human user 702 about the outcomes of actions taken based on the personalized triage or to provide updated information on system behavior.

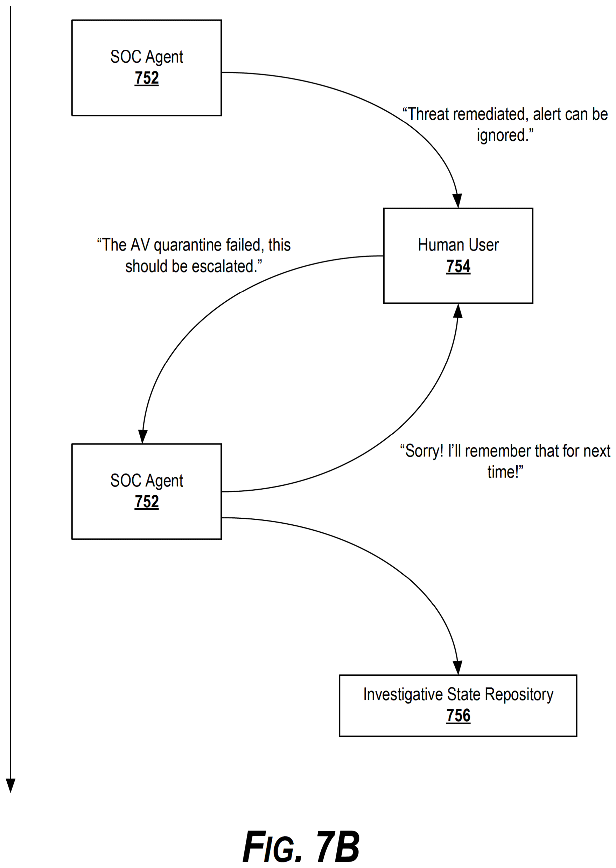

Figure 7B illustrates an example of an interaction involving a SOC agent 752, a human user 754, and an investigative state repository 756 according to example implementations of the present disclosure.

As illustrated in Figure 7B, the SOC agent 752 engages in a communication exchange with the human user 754. The SOC agent 752 can be an example of a cybersecurity agent configured to manage security operations center tasks, which can include monitoring network activities, responding to alerts, and interacting with human operators. The interaction between the SOC agent 752 and the human user 754 can involve the exchange of information regarding threat management and response strategies.

The human user 754 can be an example of a cybersecurity professional or an operator within a security operations center. Figure 7B demonstrates how the human user 754 can provide feedback to the SOC agent 752 about the handling of a particular security incident.

Specifically, as shown in Figure 7B, the SOC agent 752 may indicate to the human user 754 that a threat has been remediated and that an alert can be ignored. However, the human user 754 can inform the SOC agent 752 that, in fact, a previous action, such as an antivirus quarantine, has failed and needs escalation. In response, the SOC agent 752 can operate to update the investigative state repository 756.

The investigative state repository 756 can serve as a storage component that retains information about the interactions and decisions made during the cybersecurity operations. This repository can include data logs, decision outcomes, and interaction histories between agents and human users. For example, the investigation state can encapsulate key data about the sequence of steps in the investigation - not only on alerts and verdicts, but also intermediate information about previous alert investigation and their outcomes.

The SOC agent 752 can update the investigative state repository 756 with new data from its interactions, which can be used for future reference or for learning purposes. As an example, as shown in Figure 7B, an update can automatically occur any time an agent's output or action is indicated as incorrect by a user.

By automatically updating the investigative state repository 756 in such instances, edge cases where the agentic system fails to provide the correct response can be captured and corrected/reviewed at future instances of similar events. In particular, by incorporating human feedback, the agent can rectify past analysis errors and build a repository of long-term institutional/organizational knowledge.

As an example, consider a situation where an XDR technology always reports an event that triggers an FP alert on restart/update of the system. Investigation state could potentially be used to communicate this to an agent, including institutional knowledge from human reports. Where the environment state (the alert) alone along with the agent's prior knowledge might yield an error, the inclusion of the investigation state would allow the agent to "remember" to accurately dismiss the FP.

Thus, as trust is established through consistent performance and learning from feedback, the SOC agent 752 can operate with greater independence. Mistakes made by the SOC agent 752, such as the failure to properly escalate an issue as indicated by the human user 754, can trigger additional scrutiny and adjustments in the agent's operational parameters, which are documented and can be accommodated in the agent state stored within the investigative state repository 756.

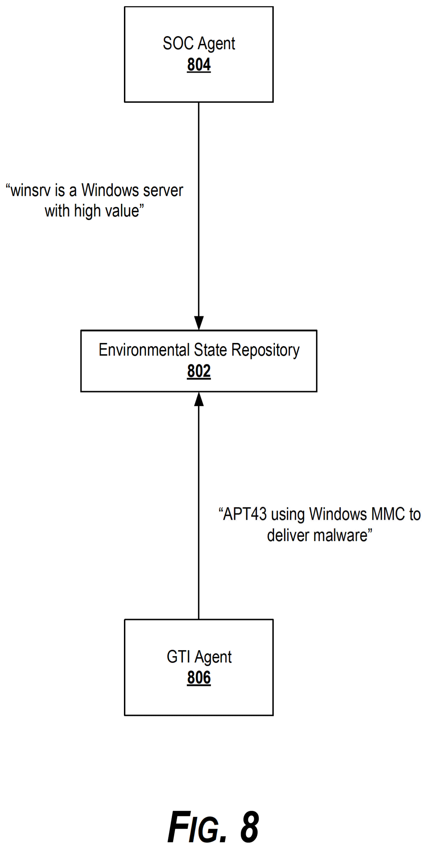

Figure 8 depicts a block diagram illustrating an example of interactions between various components within a multi-agent cybersecurity operations framework according to example implementations of example aspects of the present disclosure. The diagram includes three main components: an SOC Agent 804, an environmental state repository 802, and a GTI Agent 806.

The SOC agent 804 can be an example of a cybersecurity agent that operates within a security operations center. This agent is responsible for monitoring and managing security operations and can be configured to handle alerts and perform initial assessments of cybersecurity events. In this example, the SOC agent 804 sends information to the environmental state repository 802. The information, depicted as "winsrv is a Windows server with high value," demonstrates an example of the SOC agent 804 identifying and communicating the importance and characteristics of certain assets within the environment it monitors.

The environmental state repository 802 serves as a centralized knowledge base that stores information about the customer's environment. This repository can include data about various assets, their configurations, and their security relevance. The environmental state repository 802 helps in avoiding fractured experiences where different security tools are unaware of the information shared with others, as indicated by the example where a product might not recognize high-priority assets already reported to another system.

As another example, from the environmental state repository 802, information flows to and/or from the GTI Agent 806. The GTI Agent 806 can be an example of a cybersecurity agent that specializes in threat intelligence. It uses information from the environmental state repository 802 to perform its functions, which can include analyzing threat actors, their methods, and the implications of their activities on the environment.

One example flow of information is represented by the transmission of the message "APT43 using Windows MMC to deliver malware" from the GTI Agent 806 to the environmental state repository 802.

Additionally, in some implementations, the type of environment information that gets stored and/or retrieved may depend on the investigation state and visa versa. For example, if the investigation is trivial, the agent may be able to solve it without further queries, or the agent may decide that retrieval of further information is necessary. Moreover, the investigation state may have a bearing on what type of environment state information to retrieve, e.g., opting for similar alerts or performing a Unified Data Model search with specific parameters, and vice versa.

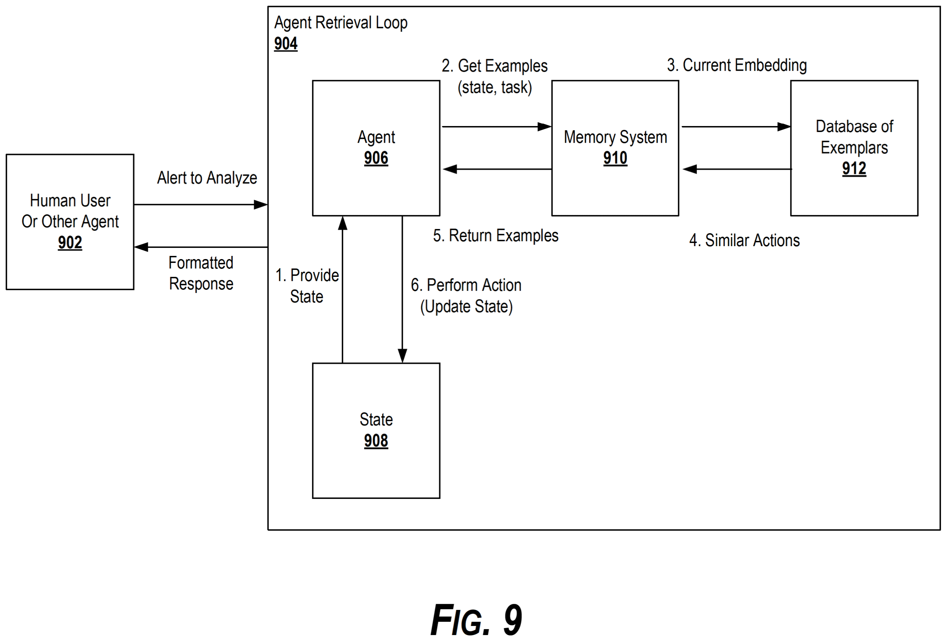

Figure 9 illustrates the interaction between various components within an autonomous cybersecurity system designed to analyze and respond to security alerts. The diagram illustrates an example agent retrieval loop 904.

A human user or other agent 902 initiates the process by providing an alert to analyze. This input is directed towards the agent 906, which is responsible for handling the processing of the alert. Distilled information from the query and the alert could constitute an initial investigation state 908.

The agent 906 can also interact with a memory system 910. The memory system 910 is configured to store, retrieve, or otherwise manage a variety of data relevant to the cybersecurity operations. It can include, for example, previously analyzed alerts, outcomes of past investigations, and/or other pertinent data that aids in the current processing of alerts.

The memory system 910 accesses the database of exemplars 912, which is part of or linked to the memory system 910. For example, the database of exemplars 912 can contain examples or templates of past alerts and their analyses, which can be used to compare with the current alert to determine potential similarities or patterns. Example databases 912 include an environment state repository and an investigative state repository, as described elsewhere herein.

The database 912 can be structured to facilitate quick retrieval of data that matches or closely resembles the current alert's characteristics. In some implementations, the database 912 can be accessed using a Unified Data Model query. In some implementations, the database 912 can be accessed using an embedding-based retrieval.

The process within the agent retrieval loop 904 also involves updating the state 908, which represents the current understanding or status of the alert as it is being processed. The state 908 is dynamically updated as the agent 906 performs actions based on the analysis of the current alert and the information retrieved from the memory system 910 and the database of exemplars 912.

Thus, as one example, upon receiving a new alert, the agent 906 can retrieve similar investigation state information, where this state vector contains information about a similar investigation (e.g., at this stage, the query + alert) and the actions that were next performed. Using this context, the agent 906 can then either reach a determination or query the environment state (alert similarity search, UDM search, etc.) according to action suggestions.

The agent 906 can iterate from that point, updating its state vector at each stage of the investigation, indexing similar state, then querying the environment, until either a reasonable answer to the query is reached, or a max number of iterations has been exceeded.

There are several approaches for crafting an investigation state vector. For example, some example implementations can embed the entire investigation episode into a vector (e.g., including retrieved context, such as alerts), a high-level abstractive summary of the investigation, or detailed investigation steps/actions but with an abstractive summary of retrieved context (e.g., alerts). Whatever the granularity, the information associated with each retrieved investigation can be indexed by a state vector, along with next steps/action taken during that investigation.

Thus, the interaction between the illustrated components can be iterative, with the agent 906 continuously refining its understanding and response to the alert by retrieving and analyzing more examples from the database of exemplars 912, updating the embedding in the memory system 910, and revising the state 908 accordingly. This loop continues until a sufficiently informed decision or action can be taken regarding the alert, resulting in a formatted response being sent back to the human user or other agent 902.

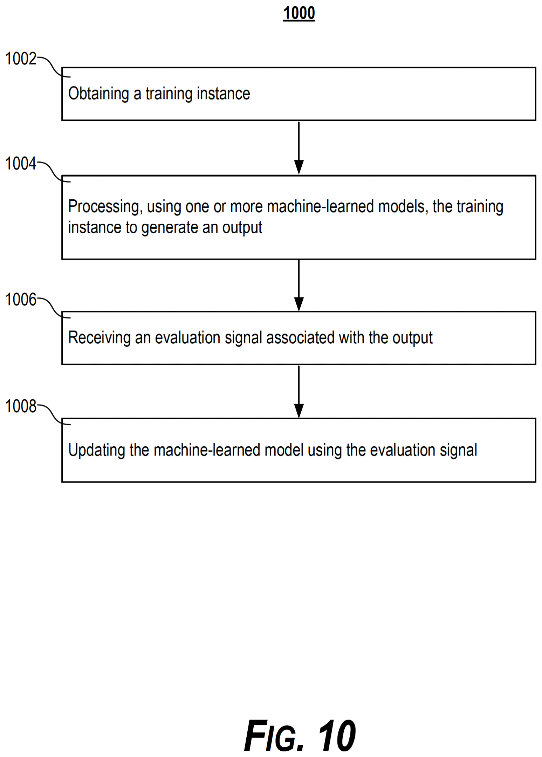

Figure 10 depicts a flowchart of a method 1000 for training one or more machine-learned models according to aspects of the present disclosure. For instance, an example machine-learned model can include a sequence processing model.

One or more portion(s) of example method 1000 can be implemented by a computing system that includes one or more computing devices such as, for example, computing systems described with reference to the other figures. Each respective portion of example method 1000 can be performed by any (or any combination) of one or more computing devices. Moreover, one or more portion(s) of example method 1000 can be implemented on the hardware components of the device(s) described herein, for example, to train one or more systems or models. Figure 10 depicts elements performed in a particular order for purposes of illustration and discussion. Those of ordinary skill in the art, using the disclosures provided herein, will understand that the elements of any of the methods discussed herein can be adapted, rearranged, expanded, omitted, combined, or modified in various ways without deviating from the scope of the present disclosure. Figure 10 is described with reference to elements/terms described with respect to other systems and figures for exemplary illustrated purposes and is not meant to be limiting. One or more portions of example method 1000 can be performed additionally, or alternatively, by other systems.

At 1002, example method 1000 can include obtaining a training instance. A set of training data can include a plurality of training instances divided between multiple datasets (e.g., a training dataset, a validation dataset, or testing dataset). A training instance can be labeled or unlabeled. Although referred to in example method 1000 as a "training" instance, it is to be understood that runtime inferences can form training instances when a model is trained using an evaluation of the model's performance on that runtime instance (e.g., online training/learning). Example data types for the training instance and various tasks associated therewith are described throughout the present disclosure.

At 1004, example method 1000 can include processing, using one or more machine-learned models, the training instance to generate an output. The output can be directly obtained from the one or more machine-learned models or can be a downstream result of a chain of processing operations that includes an output of the one or more machine-learned models.

At 1006, example method 1000 can include receiving an evaluation signal associated with the output. The evaluation signal can be obtained using a loss function. Various determinations of loss can be used, such as mean squared error, likelihood loss, cross entropy loss, hinge loss, contrastive loss, or various other loss functions. The evaluation signal can be computed using known ground-truth labels (e.g., supervised learning), predicted or estimated labels (e.g., semi- or self-supervised learning), or without labels (e.g., unsupervised learning). The evaluation signal can be a reward (e.g., for reinforcement learning). The reward can be computed using a machine-learned reward model configured to generate rewards based on output(s) received. The reward can be computed using feedback data describing human feedback on the output(s).

At 1008, example method 1000 can include updating the machine-learned model using the evaluation signal. For example, values for parameters of the machine-learned model(s) can be learned, in some embodiments, using various training or learning techniques, such as, for example, backwards propagation. For example, the evaluation signal can be backpropagated from the output (or another source of the evaluation signal) through the machine-learned model(s) to update one or more parameters of the model(s) (e.g., based on a gradient of the evaluation signal with respect to the parameter value(s)). For example, system(s) containing one or more machine-learned models can be trained in an end-to-end manner. Gradient descent techniques can be used to iteratively update the parameters over a number of training iterations. In some implementations, performing backwards propagation of errors can include performing truncated backpropagation through time. Example method 1000 can include implementing a number of generalization techniques (e.g., weight decays, dropouts, etc.) to improve the generalization capability of the models being trained.

In some implementations, example method 1000 can be implemented for training a machine-learned model from an initialized state to a fully trained state (e.g., when the model exhibits a desired performance profile, such as based on accuracy, precision, recall, etc.).

In some implementations, example method 1000 can be implemented for particular stages of a training procedure. For instance, in some implementations, example method 1000 can be implemented for pre-training a machine-learned model. Pre-training can include, for instance, large-scale training over potentially noisy data to achieve a broad base of performance levels across a variety of tasks/data types.

In some implementations, example method 1000 can be implemented for fine-tuning a machine-learned model. Fine-tuning can include, for instance, smaller-scale training on higher-quality (e.g., labeled, curated, etc.) data. Fine-tuning can affect all or a portion of the parameters of a machine-learned model. For example, various portions of the machine-learned model can be "frozen" for certain training stages. For example, parameters associated with an embedding space can be "frozen" during fine-tuning (e.g., to retain information learned from a broader domain(s) than present in the fine-tuning dataset(s)). In some implementations, example method 1000 uses adapter modules. Adapters can be small trainable layers that are inserted between pre-existing layers of a pre-trained model. During the fine-tuning process, the original parameters of the pre-trained model are typically frozen, and only the parameters of the adapters are updated.

In some implementations, example method 1000 can be implemented to execute parameter-efficient fine-tuning methods, such as Low-Rank Adaptation (LoRA). LoRA can refine pre-trained models with minimal adjustments to the original parameters. This can be achieved by introducing trainable low-rank matrices that modify the behavior of the pre-trained weights without directly altering them. In some implementations, during fine-tuning, only these auxiliary matrices are updated, which significantly reduces the number of parameters that are trained.

An example fine-tuning approach includes reinforcement learning. Reinforcement learning can be based on user feedback on model performance during use.

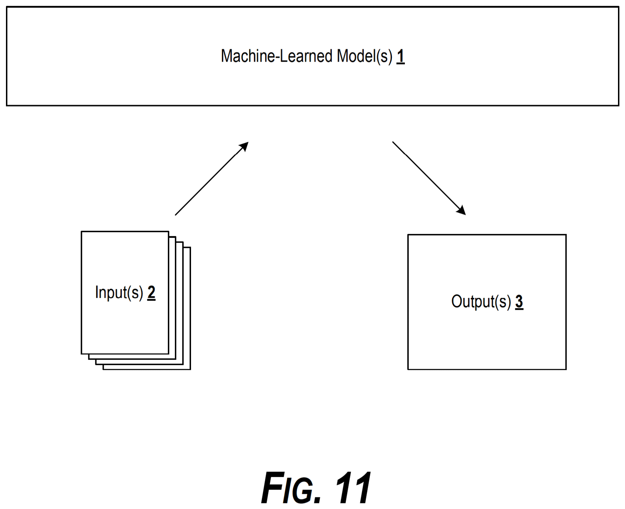

Figure 11 is a block diagram of an example processing flow for using machine-learned model(s) 1 to process input(s) 2 to generate output(s) 3.

Machine-learned model(s) 1 can be or include one or multiple machine-learned models or model components. Example machine-learned models can include neural networks (e.g., deep neural networks). Example machine-learned models can include non-linear models or linear models. Example machine-learned models can use other architectures in lieu of or in addition to neural networks. Example machine-learned models can include decision tree based models, support vector machines, hidden Markov models, Bayesian networks, linear regression models, k-means clustering models, etc.

Machine-learned model(s) 1 can be or include, or otherwise be representative of any one or more of the machine-learned models described above with respect to the preceding figures. For example, machine-learned model(s) 1 can be or include, or otherwise be representative of any one or more of any other machine-learned component described herein. Although various features, variations, and implementations described below are described with respect to machine-learned model(s) 1, it is to be understood that such features, variations, and implementations are to be understood as described with respect to each of any other machine-learned component described herein.

Example neural networks can include feed-forward neural networks, recurrent neural networks (RNNs), including long short-term memory (LSTM) based recurrent neural networks, convolutional neural networks (CNNs), diffusion models, generative-adversarial networks, or other forms of neural networks. Example neural networks can be deep neural networks. Some example machine-learned models can leverage an attention mechanism such as self-attention. For example, some example machine-learned models can include multi-headed self-attention models.

Machine-learned model(s) 1 can include a single or multiple instances of the same model configured to operate on data from input(s) 2. Machine-learned model(s) 1 can include multiple different models or multiple different model portions configured to operate on data from input(s) 2.

Machine-learned model(s) 1 can include an ensemble of different models that can cooperatively interact to process data from input(s) 2. For example, a model ensemble can include multiple models that have different attributes (e.g., different architectures, trained with different recipes, etc.). The ensemble can output an overall output based on the individual outputs of the constituent models. In this manner, for instance, the diverse constituent models can work together to provide system-level robustness by effectively aggregating over individual strengths and weaknesses of any given model. The respective individual outputs can be combined in a weighted combination, using a voting or routing mechanism, or a learned output layer (e.g., one or more feedforward or fully-connected layers).

Machine-learned model(s) 1 can employ a mixture-of-experts structure. *See, e.g.,* Zhou et al., Mixture-of-Experts with Expert Choice Routing, ARXIV:2202.09368v2 (Oct. 14, 2022). For example, different portions of a model can learn (explicitly or implicitly) different expertise areas, with pathways through the model being selected by a learned routing mechanism that engages the appropriate expert for a given input (e.g., a given portion of an input, such as on a per-token basis). For example, a feedforward network can be sparsely activated for a given portion of an input based on an output of a routing mechanism that processes the portion of the input. In this manner, for instance, the group of activated weights can form an "expert" that is selected by the router. On each forward pass, only a subset of the total model weights may be engaged, thereby decreasing a quantity of operations performed for processing a given input compared to a densely activated model. In this manner, for instance, the expressive and interpretive power of a high-parameter-count model can be achieved with more compute-efficient forward passes.

Input(s) 2 can generally include or otherwise represent various types of data. Input(s) 2 can include one type or many different types of data. Output(s) 3 can be data of the same type(s) or of different types of data as compared to input(s) 2. Output(s) 3 can include one type or many different types of data.

Example data types for input(s) 2 or output(s) 3 include natural language text data, software code data (e.g., source code, object code, machine code, or any other form of computer-readable instructions or programming languages), machine code data (e.g., binary code, assembly code, or other forms of machine-readable instructions that can be executed directly by a computer's central processing unit), assembly code data (e.g., low-level programming languages that use symbolic representations of machine code instructions to program a processing unit), genetic data or other chemical or biochemical data, image data, audio data, audiovisual data, haptic data, biometric data, medical data, financial data, statistical data, geographical data, astronomical data, historical data, sensor data generally (e.g., digital or analog values, such as voltage or other absolute or relative level measurement values from a real or artificial input, such as from an audio sensor, light sensor, displacement sensor, etc.), and the like. Data can be raw or processed and can be in any format or schema.

In multimodal inputs 2 or outputs 3, example combinations of data types include image data and audio data, image data and natural language data, natural language data and software code data, image data and biometric data, sensor data and medical data, etc. It is to be understood that any combination of data types in an input 2 or an output 3 can be present.

An example input 2 can include one or multiple data types, such as the example data types noted above. An example output 3 can include one or multiple data types, such as the example data types noted above. The data type(s) of input 2 can be the same as or different from the data type(s) of output 3. It is to be understood that the example data types noted above are provided for illustrative purposes only. Data types contemplated within the scope of the present disclosure are not limited to those examples noted above.

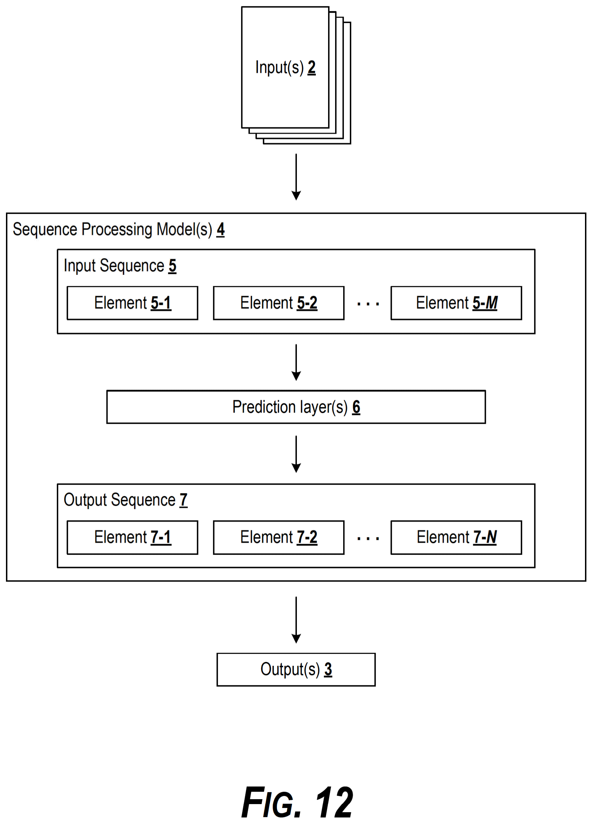

Figure 12 is a block diagram of an example implementation of an example machine-learned model configured to process sequences of information. For instance, an example implementation of machine-learned model(s) 1 can include machine-learned sequence processing model(s) 4. An example system can pass input(s) 2 to sequence processing model(s) 4. Sequence processing model(s) 4 can include one or more machine-learned components. Sequence processing model(s) 4 can process the data from input(s) 2 to obtain an input sequence 5. Input sequence 5 can include one or more input elements 5-1, 5-2, ... , *5-M,* etc. obtained from input(s) 2. Sequence processing model 4 can process input sequence 5 using prediction layer(s) 6 to generate an output sequence 7. Output sequence 7 can include one or more output elements 7-1, 7-2, ... , 7-N, etc. generated based on input sequence 5. The system can generate output(s) 3 based on output sequence 7.

Sequence processing model(s) 4 can include one or multiple machine-learned model components configured to ingest, generate, or otherwise reason over sequences of information. For example, some example sequence processing models are referred to as language models and can leverage language-based understandings across one or multiple modalities of input information. Sequence processing model(s) 4 can include relatively large models (e.g., more parameters, computationally expensive, etc.), which may be referred to as "Large Language Models" or LLMs. Sequence processing model(s) 4 can include relatively small models (e.g., fewer parameters, computationally lightweight, etc.), which may be referred to as "Small Language Models" or SLMs. Example language models include, for instance, models described in Gemma: Open Models Based on Gemini Research and Technology, GOOGLE, https://arxiv.org/abs/2403.08295; Gemma 2: Improving Open Language Models at a Practical Size, GOOGLE, https://arxiv.org/abs/2408.00118.

Sequence processing model(s) 4 can process one or multiple types of data simultaneously. Variations of language models that can perform joint vision and language tasks may be referred to as "Vision-Language Models," or VLMs. Example VLMs include models described in PaliGemma: A versatile 3B VLM for transfer, GOOGLE, https://arxiv.org/abs/2407.07726; PaliGemma 2: A Family of Versatile VLMs for Transfer, GOOGLE, https://arxiv.org/abs/2412.03555; Flamingo: a Visual Language Model for Few-Shot Learning, GOOGLE, https://arxiv.org/abs/2204.14198; PaLI: A Jointly-Scaled Multilingual Language-Image Model, GOOGLE, https://arxiv.org/abs/2209.06794.

Sequence processing model(s) 4 can be multimodal. Example multimodal sequence processing models include, for instance, models described in Gemini: A Family of Highly Capable Multimodal Models, GOOGLE, https://arxiv.org/abs/2312.11805; Gemini 1.5: Unlocking multimodal understanding across millions of tokens of context, GOOGLE, https://arxiv.org/abs/2403.05530.

Other example sequence processing models can operate to generate outputs or receive inputs in specific domains, such as image domains, *see, e.g.,* Dosovitskiy et al., An Image is Worth 16x16 Words: Transformers for Image Recognition at Scale, ARXIV:2010.11929v2 (Jun. 3, 2021), audio domains, *see, e.g.,* Agostinelli et al., MusicLM: Generating Music From Text, ARXIV:2301.11325v1 (Jan. 26, 2023), biochemical domains, *see, e.g.,* Jumper et al., Highly accurate protein structure prediction with AlphaFold, 596 Nature 583 (Aug. 26, 2021), by way of example.

In general, sequence processing model(s) 4 can obtain input sequence 5 using data from input(s) 2. For instance, input sequence 5 can include a representation of data from input(s) 2 in a format understood by sequence processing model(s) 4. One or more machine-learned components of sequence processing model(s) 4 can ingest the data from input(s) 2, parse the data into pieces compatible with the processing architectures of sequence processing model(s) 4 (e.g., via "tokenization"), and project the pieces into an input space associated with prediction layer(s) 6 (e.g., via "embedding").

Sequence processing model(s) 4 can ingest the data from input(s) 2 and parse the data into a sequence of elements to obtain input sequence 5. For example, a portion of input data from input(s) 2 can be broken down into pieces that collectively represent the content of the portion of the input data. The pieces can provide the elements of the sequence.

Elements 5-1, 5-2, . .., *5-M can* represent, in some cases, building blocks for capturing or expressing meaningful information in a particular data domain. For instance, the elements can describe "atomic units" across one or more domains. For example, for textual input source(s), the elements can correspond to groups of one or more words or sub-word components, such as sets of one or more characters.

For example, elements 5-1, 5-2, . .., 5-*M* can represent tokens obtained using a tokenizer. For instance, a tokenizer can process a given portion of an input source and output a series of tokens (e.g., corresponding to input elements 5-1, 5-2, ... , 5-*M*) that represent the portion of the input source. Various approaches to tokenization can be used. For instance, textual input source(s) can be tokenized using a byte-pair encoding (BPE) technique. *See, e.g.,* Kudo et al., SentencePiece: A simple and language independent subword tokenizer and detokenizer for Neural Text Processing, PROCEEDINGS OF THE 2018 CONFERENCE ON EMPIRICAL METHODS IN NATURAL LANGUAGE PROCESSING (System Demonstrations), pages 66-71 (October 31-November 4, 2018), https://aclanthology.org/D18-2012.pdf. Image-based input source(s) can be tokenized by extracting and serializing patches from an image.

In general, arbitrary data types can be serialized and processed into input sequence 5. It is to be understood that element(s) 5-1, 5-2, ... , 5-*M* depicted in Figure 12 can be the tokens or can be the embedded representations thereof.

Prediction layer(s) 6 can predict one or more output elements 7-1, 7-2, ... , 7-*N* based on the input elements. Prediction layer(s) 6 can include one or more machine-learned model architectures, such as one or more layers of learned parameters that manipulate and transform the input(s) to extract higher-order meaning from, and relationships between, input element(s) 5-1, 5-2, ... , 5-*M.* In this manner, for instance, example prediction layer(s) 6 can predict new output element(s) in view of the context provided by input sequence 5.

Prediction layer(s) 6 can evaluate associations between portions of input sequence 5 and a particular output element. These associations can inform a prediction of the likelihood that a particular output follows the input context. For example, consider the textual snippet, "The carpenter's toolbox was small and heavy. It was full of _." Example prediction layer(s) 6 can identify that "It" refers back to "toolbox" by determining a relationship between the respective embeddings. Example prediction layer(s) 6 can also link "It" to the attributes of the toolbox, such as "small" and "heavy." Based on these associations, prediction layer(s) 6 can, for instance, assign a higher probability to the word "nails" than to the word "sawdust."

A transformer is an example architecture that can be used in prediction layer(s) 4. *See, e.g.,* Vaswani et al., Attention Is All You Need, ARXIV:1706.03762v7 (Aug. 2, 2023). A transformer is an example of a machine-learned model architecture that uses an attention mechanism to compute associations between items within a context window. The context window can include a sequence that contains input sequence 5 and potentially one or more output element(s) 7-1, 7-2, ... , 7-N. A transformer block can include one or more attention layer(s) and one or more post-attention layer(s) (e.g., feedforward layer(s), such as a multi-layer perceptron).

Prediction layer(s) 6 can include other machine-learned model architectures in addition to or in lieu of transformer-based architectures. For example, recurrent neural networks (RNNs) and long short-term memory (LSTM) models can also be used, as well as convolutional neural networks (CNNs). In general, prediction layer(s) 6 can leverage various kinds of artificial neural networks that can understand or generate sequences of information.

Output sequence 7 can include or otherwise represent the same or different data types as input sequence 5. For instance, input sequence 5 can represent textual data, and output sequence 7 can represent textual data. Input sequence 5 can represent image, audio, or audiovisual data, and output sequence 7 can represent textual data (e.g., describing the image, audio, or audiovisual data). It is to be understood that prediction layer(s) 6, and any other interstitial model components of sequence processing model(s) 4, can be configured to receive a variety of data types in input sequence(s) 5 and output a variety of data types in output sequence(s) 7.

Output sequence 7 can have various relationships to input sequence 5. Output sequence 7 can be a continuation of input sequence 5. Output sequence 7 can be complementary to input sequence 5. Output sequence 7 can translate, transform, augment, or otherwise modify input sequence 5. Output sequence 7 can answer, evaluate, confirm, or otherwise respond to input sequence 5. Output sequence 7 can implement (or describe instructions for implementing) an instruction provided via input sequence 5.

Output sequence 7 can be generated autoregressively. For instance, for some applications, an output of one or more prediction layer(s) 6 can be passed through one or more output layers (e.g., softmax layer) to obtain a probability distribution over an output vocabulary (e.g., a textual or symbolic vocabulary) conditioned on a set of input elements in a context window. In this manner, for instance, output sequence 7 can be autoregressively generated by sampling a likely next output element, adding that element to the context window, and regenerating the probability distribution based on the updated context window, and sampling a likely next output element, and so forth.

Output sequence 7 can also be generated non-autoregressively. For instance, multiple output elements of output sequence 7 can be predicted together without explicit sequential conditioning on each other. *See, e.g.,* Saharia et al., Non-Autoregressive Machine Translation with Latent Alignments, ARXIV:2004.07437v3 (Nov. 16, 2020).

Output sequence 7 can include one or multiple portions or elements. In an example content generation configuration, output sequence 7 can include multiple elements corresponding to multiple portions of a generated output sequence (e.g., a textual sentence, values of a discretized waveform, computer code, etc.). In an example classification configuration, output sequence 7 can include a single element associated with a classification output. For instance, an output "vocabulary" can include a set of classes into which an input sequence is to be classified. For instance, a vision transformer block can pass latent state information to a multilayer perceptron that outputs a likely class value associated with an input image.

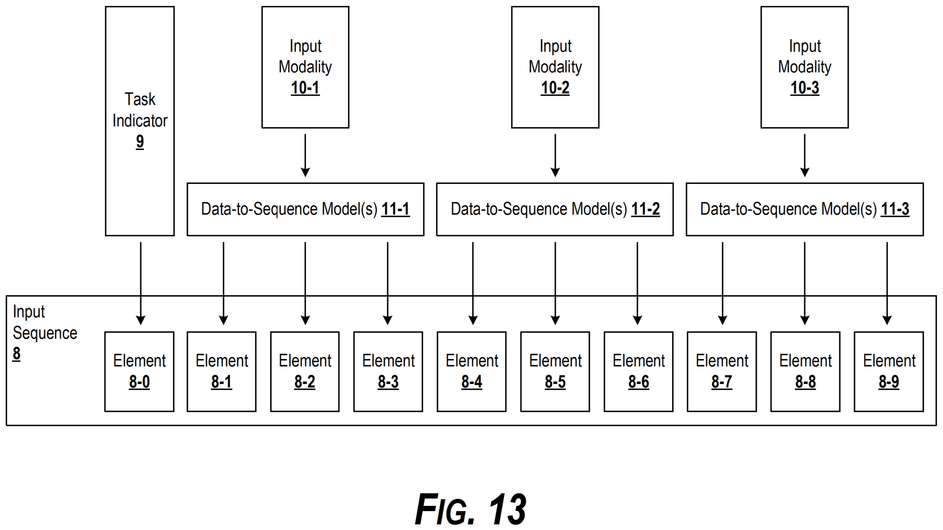

Figure 13 is a block diagram of an example technique for populating an example input sequence 8. Input sequence 8 can include various functional elements that form part of the model infrastructure, such as an element 8-0 obtained from a task indicator 9 that signals to any model(s) that process input sequence 8 that a particular task is being performed (e.g., to help adapt a performance of the model(s) to that particular task). Input sequence 8 can include various data elements from different data modalities. For instance, an input modality 10-1 can include one modality of data. A data-to-sequence model 11-1 can process data from input modality 10-1 to project the data into a format compatible with input sequence 8 (e.g., one or more vectors dimensioned according to the dimensions of input sequence 8) to obtain elements 8-1, 8-2, 8-3. Another input modality 10-2 can include a different modality of data. A data-to-sequence model 11-2 can project data from input modality 10-2 into a format compatible with input sequence 8 to obtain elements 8-4, 8-5, 8-6. Another input modality 10-3 can include yet another different modality of data. A data-to-sequence model 11-3 can project data from input modality 10-3 into a format compatible with input sequence 8 to obtain elements 8-7, 8-8, 8-9.

Input sequence 8 can be the same as or different from input sequence 5. Input sequence 8 can be a multimodal input sequence that contains elements that represent data from different modalities using a common dimensional representation. For instance, an embedding space can have *P* dimensions. Input sequence 8 can be configured to contain a plurality of elements that have *P* dimensions. In this manner, for instance, example implementations can facilitate information extraction and reasoning across diverse data modalities by projecting data into elements in the same embedding space for comparison, combination, or other computations therebetween.

For example, elements 8-0, ... , 8-9 can indicate particular locations within a multidimensional embedding space. Some elements can map to a set of discrete locations in the embedding space. For instance, elements that correspond to discrete members of a predetermined vocabulary of tokens can map to discrete locations in the embedding space that are associated with those tokens. Other elements can be continuously distributed across the embedding space. For instance, some data types can be broken down into continuously defined portions (e.g., image patches) that can be described using continuously distributed locations within the embedding space.

In some implementations, the expressive power of the embedding space may not be limited to meanings associated with any particular set of tokens or other building blocks. For example, a continuous embedding space can encode a spectrum of high-order information. An individual piece of information (e.g., a token) can map to a particular point in that space: for instance, a token for the word "dog" can be projected to an embedded value that points to a particular location in the embedding space associated with canine-related information. Similarly, an image patch of an image of a dog on grass can also be projected into the embedding space. In some implementations, the projection of the image of the dog can be similar to the projection of the word "dog" while also having similarity to a projection of the word "grass," while potentially being different from both. In some implementations, the projection of the image patch may not exactly align with any single projection of a single word. In some implementations, the projection of the image patch can align with a combination of the projections of the words "dog" and "grass." In this manner, for instance, a high-order embedding space can encode information that can be independent of data modalities in which the information is expressed.

Task indicator 9 can include a model or model component configured to identify a task being performed and inject, into input sequence 8, an input value represented by element 8-0 that signals which task is being performed. For instance, the input value can be provided as a data type associated with an input modality and projected along with that input modality (e.g., the input value can be a textual task label that is embedded along with other textual data in the input; the input value can be a pixel-based representation of a task that is embedded along with other image data in the input; etc.). The input value can be provided as a data type that differs from or is at least independent from other input(s). For instance, the input value represented by element 8-0 can be learned within a continuous embedding space.

Input modalities 10-1, 10-2, and 10-3 can be associated with various different data types (e.g., as described above with respect to input(s) 2 and output(s) 3).

Data-to-sequence models 11-1, 11-2, and 11-3 can be the same or different from each other. Data-to-sequence models 11-1, 11-2, and 11-3 can be adapted to each respective input modality 10-1, 10-2, and 10-3. For example, a textual data-to-sequence model can subdivide a portion of input text and project the subdivisions into element(s) in input sequence 8 (e.g., elements 8-1, 8-2, 8-3, etc.). An image data-to-sequence model can subdivide an input image and project the subdivisions into element(s) in input sequence 8 (e.g., elements 8-4, 8-5, 8-6, etc.). An arbitrary data type data-to-sequence model can subdivide an input of that arbitrary data type and project the subdivisions into element(s) in input sequence 8 (e.g., elements 8-7, 8-8, 8-9, etc.).

Data-to-sequence models 11-1, 11-2, and 11-3 can form part of machine-learned sequence processing model(s) 4. Data-to-sequence models 11-1, 11-2, and 11-3 can be jointly trained with or trained independently from machine-learned sequence processing model(s) 4. Data-to-sequence models 11-1, 11-2, and 11-3 can be trained end-to-end with machine-learned sequence processing model(s) 4.

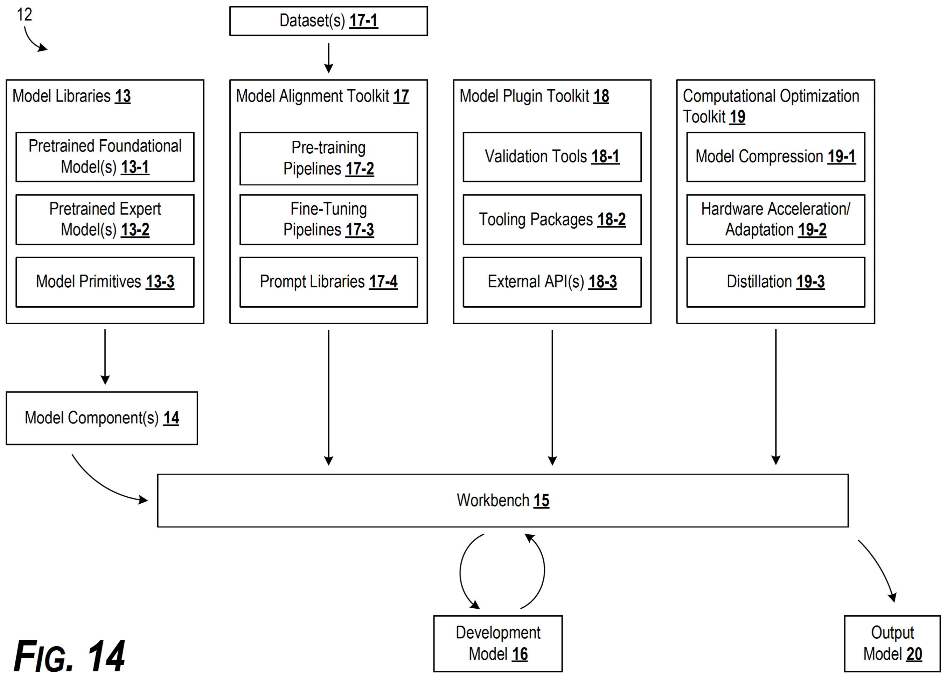

Figure 14 is a block diagram of an example model development platform 12 that can facilitate creation, adaptation, and refinement of example machine-learned models (e.g., machine-learned model(s) 1, sequence processing model(s) 4, etc.). Model development platform 12 can provide a number of different toolkits that developer systems can employ in the development of new or adapted machine-learned models.

Model development platform 12 can provide one or more model libraries 13 containing building blocks for new models. Model libraries 13 can include one or more pre-trained foundational models 13-1, which can provide a backbone of processing power across various tasks. Model libraries 13 can include one or more pre-trained expert models 13-2, which can be focused on performance in particular domains of expertise. Model libraries 13 can include various model primitives 13-3, which can provide low-level architectures or components (optionally pre-trained), which can be assembled in various arrangements as desired. Model primitives 13-3 can include a library of pre-trained adapters or LoRA modules that can adapt a baseline foundational model to align its outputs with a desired performance profile, augment model capabilities (e.g., to adapt to a different input modality, etc.), and the like.

Model development platform 12 can receive selections of various model components 14. Model development platform 12 can pass selected model components 14 to a workbench 15 that combines selected model components 14 into a development model 16.

Workbench 15 can facilitate further refinement and adaptation of development model 16 by leveraging a number of different toolkits integrated with model development platform 12. For example, workbench 15 can facilitate alignment of the development model 16 with a desired performance profile on various tasks using a model alignment toolkit 17.

Model alignment toolkit 17 can provide a number of tools for causing development model 16 to generate outputs aligned with desired behavioral characteristics. Alignment can include increasing the accuracy, precision, recall, etc. of model outputs. Alignment can include enforcing output styles, schema, or other preferential characteristics of model outputs. Alignment can be general or domain-specific. For instance, a pre-trained foundational model 13-1 can begin with an initial level of performance across multiple domains. Alignment of the pre-trained foundational model 13-1 can include improving a performance in a particular domain of information or tasks (e.g., even at the expense of performance in another domain of information or tasks).

Model alignment toolkit 17 can integrate one or more dataset(s) 17-1 for aligning development model 16. Curated dataset(s) 17-1 can include labeled or unlabeled training data. Dataset(s) 17-1 can be obtained from public domain datasets. Dataset(s) 17-1 can be obtained from private datasets associated with one or more developer system(s) for the alignment of bespoke machine-learned model(s) customized for private use-cases.

Pre-training pipelines 17-2 can include a machine-learned model training workflow configured to update development model 16 over large-scale, potentially noisy datasets. For example, pre-training can leverage unsupervised learning techniques (e.g., de-noising, etc.) to process large numbers of training instances to update model parameters from an initialized state and achieve a desired baseline performance. Pre-training pipelines 17-2 can leverage unlabeled datasets in dataset(s) 17-1 to perform pre-training. Workbench 15 can implement a pre-training pipeline 17-2 to pre-train development model 16.

Fine-tuning pipelines 17-3 can include a machine-learned model training workflow configured to refine the model parameters of development model 16 with higher-quality data. Fine-tuning pipelines 17-3 can update development model 16 by conducting supervised training with labeled dataset(s) in dataset(s) 17-1. Fine-tuning pipelines 17-3 can update development model 16 by conducting reinforcement learning using reward signals from user feedback signals. Workbench 15 can implement a fine-tuning pipeline 17-3 to fine-tune development model 16.

Prompt libraries 17-4 can include sets of inputs configured to induce behavior aligned with desired performance criteria. Prompt libraries 17-4 can include few-shot prompts (e.g., inputs providing examples of desired model outputs for prepending to a desired runtime query), chain-of-thought prompts (e.g., inputs providing step-by-step reasoning within the exemplars to facilitate thorough reasoning by the model), and the like.

Example prompts can be retrieved from an available repository of prompt libraries 17-4. Example prompts can be contributed by one or more developer systems using workbench 15.

In some implementations, pre-trained or fine-tuned models can achieve satisfactory performance without exemplars in the inputs. For instance, zero-shot prompts can include inputs that lack exemplars. Zero-shot prompts can be within a domain within a training dataset or outside of the training domain(s).

Prompt libraries 17-4 can include one or more prompt engineering tools. Prompt engineering tools can provide workflows for retrieving or learning optimized prompt values. Prompt engineering tools can facilitate directly learning prompt values (e.g., input element values) based on one or more training iterations. Workbench 15 can implement prompt engineering tools in development model 16.

Prompt libraries 17-4 can include pipelines for prompt generation. For example, inputs can be generated using development model 16 itself or other machine-learned models. In this manner, for instance, a first model can process information about a task and output an input for a second model to process in order to perform a step of the task. The second model can be the same as or different from the first model. Workbench 15 can implement prompt generation pipelines in development model 16.

Prompt libraries 17-4 can include pipelines for context injection. For instance, a performance of development model 16 on a particular task can improve if provided with additional context for performing the task. Prompt libraries 17-4 can include software components configured to identify desired context, retrieve the context from an external source (e.g., a database, a sensor, etc.), and add the context to the input prompt. Workbench 15 can implement context injection pipelines in development model 16.

Although various training examples described herein with respect to model development platform 12 refer to "pre-training" and "fine-tuning," it is to be understood that model alignment toolkit 17 can generally support a wide variety of training techniques adapted for training a wide variety of machine-learned models. Example training techniques can correspond to the example training method 1000 described above.

Model development platform 12 can include a model plugin toolkit 18. Model plugin toolkit 18 can include a variety of tools configured for augmenting the functionality of a machine-learned model by integrating the machine-learned model with other systems, devices, and software components. For instance, a machine-learned model can use tools to increase performance quality where appropriate. For instance, deterministic tasks can be offloaded to dedicated tools in lieu of probabilistically performing the task with an increased risk of error. For instance, instead of autoregressively predicting the solution to a system of equations, a machine-learned model can recognize a tool to call for obtaining the solution and pass the system of equations to the appropriate tool. The tool can be a traditional system of equations solver that can operate deterministically to resolve the system of equations. The output of the tool can be returned in response to the original query. In this manner, tool use can allow some example models to focus on the strengths of machine-learned models-e.g., understanding an intent in an unstructured request for a task-while augmenting the performance of the model by offloading certain tasks to a more focused tool for rote application of deterministic algorithms to a well-defined problem.

Model plugin toolkit 18 can include validation tools 18-1. Validation tools 18-1 can include tools that can parse and confirm output(s) of a machine-learned model. Validation tools 18-1 can include engineered heuristics that establish certain thresholds applied to model outputs. For example, validation tools 18-1 can ground the outputs of machine-learned models to structured data sources (e.g., to mitigate "hallucinations").

Model plugin toolkit 18 can include tooling packages 18-2 for implementing one or more tools that can include scripts or other executable code that can be executed alongside development model 16. Tooling packages 18-2 can include one or more inputs configured to cause machine-learned model(s) to implement the tools (e.g., few-shot prompts that induce a model to output tool calls in the proper syntax, etc.). Tooling packages 18-2 can include, for instance, fine-tuning training data for training a model to use a tool.

Model plugin toolkit 18 can include interfaces for calling external application programming interfaces (APIs) 18-3. For instance, in addition to or in lieu of implementing tool calls or tool code directly with development model 16, development model 16 can be aligned to output instructions that initiate API calls to send or obtain data via external systems.

Model plugin toolkit 18 can integrate with prompt libraries 17-4 to build a catalog of available tools for use with development model 16. For instance, a model can receive, in an input, a catalog of available tools, and the model can generate an output that selects a tool from the available tools and initiates a tool call for using the tool.

Model development platform 12 can include a computational optimization toolkit 19 for optimizing a computational performance of development model 16. For instance, tools for model compression 19-1 can allow development model 16 to be reduced in size while maintaining a desired level of performance. For instance, model compression 19-1 can include quantization workflows, weight pruning and sparsification techniques, etc. Tools for hardware acceleration 19-2 can facilitate the configuration of the model storage and execution formats to operate optimally on different hardware resources. For instance, hardware acceleration 19-2 can include tools for optimally sharding models for distributed processing over multiple processing units for increased bandwidth, lower unified memory requirements, etc. Tools for distillation 19-3 can provide for the training of lighter-weight models based on the knowledge encoded in development model 16. For instance, development model 16 can be a highly performant, large machine-learned model optimized using model development platform 12. To obtain a lightweight model for running in resource-constrained environments, a smaller model can be a "student model" that learns to imitate development model 16 as a "teacher model." In this manner, for instance, the investment in learning the parameters and configurations of development model 16 can be efficiently transferred to a smaller model for more efficient inference.

Workbench 15 can implement one, multiple, or none of the toolkits implemented in model development platform 12. Workbench 15 can output an output model 20 based on development model 16. Output model 20 can be a deployment version of development model 16. Output model 20 can be a development or training checkpoint of development model 16. Output model 20 can be a distilled, compressed, or otherwise optimized version of development model 16.

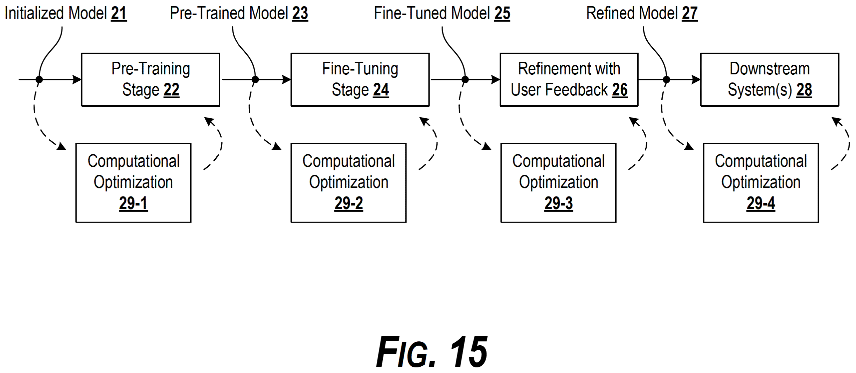

Figure 15 is a block diagram of an example training flow for training a machine-learned development model 16. One or more portion(s) of the example training flow can be implemented by a computing system that includes one or more computing devices such as, for example, computing systems described with reference to the other figures. Each respective portion of the example training flow can be performed by any (or any combination) of one or more computing devices. Moreover, one or more portion(s) of the example training flow can be implemented on the hardware components of the device(s) described herein, for example, to train one or more systems or models. Figure 15 depicts elements performed in a particular order for purposes of illustration and discussion. Those of ordinary skill in the art, using the disclosures provided herein, will understand that the elements of any of the methods discussed herein can be adapted, rearranged, expanded, omitted, combined, or modified in various ways without deviating from the scope of the present disclosure. Figure 15 is described with reference to elements/terms described with respect to other systems and figures for exemplary illustrated purposes and is not meant to be limiting. One or more portions of the example training flow can be performed additionally, or alternatively, by other systems.

Initially, development model 16 can persist in an initial state as an initialized model 21. Development model 16 can be initialized with weight values. Initial weight values can be random or based on an initialization schema. Initial weight values can be based on prior pre-training for the same or for a different model.

Initialized model 21 can undergo pre-training in a pre-training stage 22. Pre-training stage 22 can be implemented using one or more pre-training pipelines 17-2 over data from dataset(s) 17-1. Pre-training can be omitted, for example, if initialized model 21 is already pre-trained (e.g., development model 16 contains, is, or is based on a pre-trained foundational model or an expert model).

Pre-trained model 23 can then be a new version of development model 16, which can persist as development model 16 or as a new development model. Pre-trained model 23 can be the initial state if development model 16 was already pre-trained. Pre-trained model 23 can undergo fine-tuning in a fine-tuning stage 24. Fine-tuning stage 24 can be implemented using one or more fine-tuning pipelines 17-3 over data from dataset(s) 17-1. Fine-tuning can be omitted, for example, if a pre-trained model has satisfactory performance, if the model was already fine-tuned, or if other tuning approaches are preferred.

Fine-tuned model 29 can then be a new version of development model 16, which can persist as development model 16 or as a new development model. Fine-tuned model 29 can be the initial state if development model 16 was already fine-tuned. Fine-tuned model 29 can undergo refinement with user feedback 26. For instance, refinement with user feedback 26 can include reinforcement learning, optionally based on human feedback from human users of fine-tuned model 25. As reinforcement learning can be a form of fine-tuning, it is to be understood that fine-tuning stage 24 can subsume the stage for refining with user feedback 26. Refinement with user feedback 26 can produce a refined model 27. Refined model 27 can be output to downstream system(s) 28 for deployment or further development.

In some implementations, computational optimization operations can be applied before, during, or after each stage. For instance, initialized model 21 can undergo computational optimization 29-1 (e.g., using computational optimization toolkit 19) before pre-training stage 22. Pre-trained model 23 can undergo computational optimization 29-2 (e.g., using computational optimization toolkit 19) before fine-tuning stage 24. Fine-tuned model 25 can undergo computational optimization 29-3 (e.g., using computational optimization toolkit 19) before refinement with user feedback 26. Refined model 27 can undergo computational optimization 29-4 (e.g., using computational optimization toolkit 19) before output to downstream system(s) 28. Computational optimization(s) 29-1, ... , 29-4 can all be the same, all be different, or include at least some different optimization techniques.

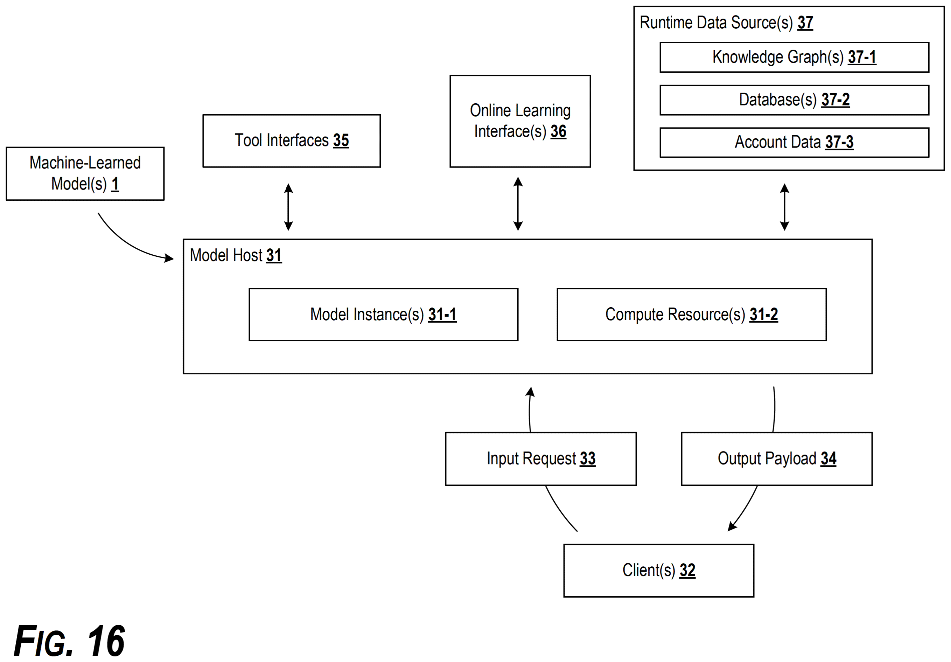

Figure 16 is a block diagram of an inference system for operating one or more machine-learned model(s) 1 to perform inference (e.g., for training, for deployment, etc.). A model host 31 can receive machine-learned model(s) 1. Model host 31 can host one or more model instance(s) 31-1, which can be one or multiple instances of one or multiple models. Model host 31 can host model instance(s) 31-1 using available compute resources 31-2 associated with model host 31.

Model host 31 can perform inference on behalf of one or more client(s) 32. Client(s) 32 can transmit an input request 33 to model host 31. Using input request 33, model host 31 can obtain input(s) 2 for input to machine-learned model(s) 1. Machine-learned model(s) 1 can process input(s) 2 to generate output(s) 3. Using output(s) 3, model host 31 can return an output payload 34 for responding to input request 33 from client(s) 32. Output payload 34 can include or be based on output(s) 3.

Model host 31 can leverage various other resources and tools to augment the inference task. For instance, model host 31 can communicate with tool interfaces 35 to facilitate tool use by model instance(s) 31-1. Tool interfaces 35 can include local or remote APIs. Tool interfaces 35 can include integrated scripts or other software functionality. Model host 31 can engage online learning interface(s) 36 to facilitate ongoing improvements to machine-learned model(s) 1. For instance, online learning interface(s) 36 can be used within reinforcement learning loops to retrieve user feedback on inferences served by model host 31. Model host 31 can access runtime data source(s) 37 for augmenting input(s) 2 with additional contextual information. For instance, runtime data source(s) 37 can include a knowledge graph 37-1 that facilitates structured information retrieval for information associated with input request(s) 33 (e.g., a search engine service). Runtime data source(s) 37 can include public or private, external or local database(s) 37-2 that can store information associated with input request(s) 33 for augmenting input(s) 2. Runtime data source(s) 37 can include account data 37-3 which can be retrieved in association with a user account corresponding to a client 32 for customizing the behavior of model host 31 accordingly.

Model host 31 can be implemented by one or multiple computing devices or systems. Client(s) 2 can be implemented by one or multiple computing devices or systems, which can include computing devices or systems shared with model host 31.

For example, model host 31 can operate on a server system that provides a machine-learning service to client device(s) that operate client(s) 32 (e.g., over a local or wide-area network). Client device(s) can be end-user devices used by individuals. Client device(s) can be server systems that operate client(s) 32 to provide various functionality as a service to downstream end-user devices.

In some implementations, model host 31 can operate on the same device or system as client(s) 32. Model host 31 can be a machine-learning service that runs on-device to provide machine-learning functionality to one or multiple applications operating on a client device, which can include an application implementing client(s) 32. Model host 31 can be a part of the same application as client(s) 32. For instance, model host 31 can be a subroutine or method implemented by one part of an application, and client(s) 32 can be another subroutine or method that engages model host 31 to perform inference functions within the application. It is to be understood that model host 31 and client(s) 32 can have various different configurations.

Model instance(s) 31-1 can include one or more machine-learned models that are available for performing inference. Model instance(s) 31-1 can include weights or other model components that are stored in persistent storage, temporarily cached, or loaded into high-speed memory. Model instance(s) 31-1 can include multiple instance(s) of the same model (e.g., for parallel execution of more requests on the same model). Model instance(s) 31-1 can include instance(s) of different model(s). Model instance(s) 31-1 can include cached intermediate states of active or inactive model(s) used to accelerate inference of those models. For instance, an inference session with a particular model may generate significant amounts of computational results that can be re-used for future inference runs (e.g., using a KV cache for transformer-based models). These computational results can be saved in association with that inference session so that session can be executed more efficiently when resumed.

Compute resource(s) 31-2 can include one or more processors (central processing units, graphical processing units, tensor processing units, machine-learning accelerators, etc.) connected to one or more memory devices. Compute resource(s) 31-2 can include a dynamic pool of available resources shared with other processes. Compute resource(s) 31-2 can include memory devices large enough to fit an entire model instance in a single memory instance. Compute resource(s) 31-2 can also shard model instance(s) across multiple memory devices (e.g., using data parallelization or tensor parallelization, etc.). This can be done to increase parallelization or to execute a large model using multiple memory devices which individually might not be able to fit the entire model into memory.

Input request 33 can include data for input(s) 2. Model host 31 can process input request 33 to obtain input(s) 2. Input(s) 2 can be obtained directly from input request 33 or can be retrieved using input request 33. Input request 33 can be submitted to model host 31 via an API.

Model host 31 can perform inference over batches of input requests 33 in parallel. For instance, a model instance 31-1 can be configured with an input structure that has a batch dimension. Separate input(s) 2 can be distributed across the batch dimension (e.g., rows of an array). The separate input(s) 2 can include completely different contexts. The separate input(s) 2 can be multiple inference steps of the same task. The separate input(s) 2 can be staggered in an input structure, such that any given inference cycle can be operating on different portions of the respective input(s) 2. In this manner, for instance, model host 31 can perform inference on the batch in parallel, such that output(s) 3 can also contain the batch dimension and return the inference results for the batched input(s) 2 in parallel. In this manner, for instance, batches of input request(s) 33 can be processed in parallel for higher throughput of output payload(s) 34.

Output payload 34 can include or be based on output(s) 3 from machine-learned model(s) 1. Model host 31 can process output(s) 3 to obtain output payload 34. This can include chaining multiple rounds of inference (e.g., iteratively, recursively, across the same model(s) or different model(s)) to arrive at a final output for a task to be returned in output payload 34. Output payload 34 can be transmitted to client(s) 32 via an API.

Online learning interface(s) 36 can facilitate reinforcement learning of machine-learned model(s) 1. Online learning interface(s) 36 can facilitate reinforcement learning with human feedback (RLHF). Online learning interface(s) 36 can facilitate federated learning of machine-learned model(s) 1.

Model host 31 can access a library of pre-trained adapters or LoRA modules that can adapt a baseline model to align its outputs with a desired performance profile, augment model capabilities (e.g., to adapt to a different input modality, etc.), and the like. For instance, model host 31 can receive an input request to load a customized model, and model host 31 can retrieve one or more components to adapt a baseline model to the custom profile. Model host 31 can determine that a particular functionality is needed for a particular task (e.g., based on an output of a model that preprocesses an input) and retrieve a pre-trained component accordingly.

Model host 31 can execute machine-learned model(s) 1 to perform inference for various tasks using various types of data. For example, various different input(s) 2 and output(s) 3 can be used for various different tasks. In some implementations, input(s) 2 can be or otherwise represent image data. Machine-learned model(s) 1 can process the image data to generate an output. As an example, machine-learned model(s) 1 can process the image data to generate an image recognition output (e.g., a recognition of the image data, a latent embedding of the image data, an encoded representation of the image data, a hash of the image data, etc.). As another example, machine-learned model(s) 1 can process the image data to generate an image segmentation output. As another example, machine-learned model(s) 1 can process the image data to generate an image classification output. As another example, machine-learned model(s) 1 can process the image data to generate an image data modification output (e.g., an alteration of the image data, etc.). As another example, machine-learned model(s) 1 can process the image data to generate an encoded image data output (e.g., an encoded and/or compressed representation of the image data, etc.). As another example, machine-learned model(s) 1 can process the image data to generate an upscaled image data output. As another example, machine-learned model(s) 1 can process the image data to generate a prediction output.

In some implementations, the task is a computer vision task. In some cases, input(s) 2 includes pixel data for one or more images and the task is an image processing task. For example, the image processing task can be image classification, where the output is a set of scores, each score corresponding to a different object class and representing the likelihood that the one or more images depict an object belonging to the object class. The image processing task may be object detection, where the image processing output identifies one or more regions in the one or more images and, for each region, a likelihood that region depicts an object of interest. As another example, the image processing task can be image segmentation, where the image processing output defines, for each pixel in the one or more images, a respective likelihood for each category in a predetermined set of categories. For example, the set of categories can be foreground and background. As another example, the set of categories can be object classes. As another example, the image processing task can be depth estimation, where the image processing output defines, for each pixel in the one or more images, a respective depth value. As another example, the image processing task can be motion estimation, where the network input includes multiple images, and the image processing output defines, for each pixel of one of the input images, a motion of the scene depicted at the pixel between the images in the network input.

In some implementations, input(s) 2 can be or otherwise represent natural language data. Machine-learned model(s) 1 can process the natural language data to generate an output. As an example, machine-learned model(s) 1 can process the natural language data to generate a language encoding output. As another example, machine-learned model(s) 1 can process the natural language data to generate a latent text embedding output. As another example, machine-learned model(s) 1 can process the natural language data to generate a translation output. As another example, machine-learned model(s) 1 can process the natural language data to generate a classification output. As another example, machine-learned model(s) 1 can process the natural language data to generate a textual segmentation output. As another example, machine-learned model(s) 1 can process the natural language data to generate a semantic intent output. As another example, machine-learned model(s) 1 can process the natural language data to generate an upscaled text or natural language output (e.g., text or natural language data that is higher quality than the input text or natural language, etc.). As another example, machine-learned model(s) 1 can process the natural language data to generate a prediction output (e.g., one or more predicted next portions of natural language content).

In some implementations, input(s) 2 can be or otherwise represent speech data (e.g., data describing spoken natural language, such as audio data, textual data, etc.). Machine-learned model(s) 1 can process the speech data to generate an output. As an example, machine-learned model(s) 1 can process the speech data to generate a speech recognition output. As another example, machine-learned model(s) 1 can process the speech data to generate a speech translation output. As another example, machine-learned model(s) 1 can process the speech data to generate a latent embedding output. As another example, machine-learned model(s) 1 can process the speech data to generate an encoded speech output (e.g., an encoded and/or compressed representation of the speech data, etc.). As another example, machine-learned model(s) 1 can process the speech data to generate an upscaled speech output (e.g., speech data that is higher quality than the input speech data, etc.). As another example, machine-learned model(s) 1 can process the speech data to generate a textual representation output (e.g., a textual representation of the input speech data, etc.). As another example, machine-learned model(s) 1 can process the speech data to generate a prediction output.

In some implementations, input(s) 2 can be or otherwise represent latent encoding data (e.g., a latent space representation of an input, etc.). Machine-learned model(s) 1 can process the latent encoding data to generate an output. As an example, machine-learned model(s) 1 can process the latent encoding data to generate a recognition output. As another example, machine-learned model(s) 1 can process the latent encoding data to generate a reconstruction output. As another example, machine-learned model(s) 1 can process the latent encoding data to generate a search output. As another example, machine-learned model(s) 1 can process the latent encoding data to generate a reclustering output. As another example, machine-learned model(s) 1 can process the latent encoding data to generate a prediction output.

In some implementations, input(s) 2 can be or otherwise represent statistical data. Statistical data can be, represent, or otherwise include data computed and/or calculated from some other data source. Machine-learned model(s) 1 can process the statistical data to generate an output. As an example, machine-learned model(s) 1 can process the statistical data to generate a recognition output. As another example, machine-learned model(s) 1 can process the statistical data to generate a prediction output. As another example, machine-learned model(s) 1 can process the statistical data to generate a classification output. As another example, machine-learned model(s) 1 can process the statistical data to generate a segmentation output. As another example, machine-learned model(s) 1 can process the statistical data to generate a visualization output. As another example, machine-learned model(s) 1 can process the statistical data to generate a diagnostic output.

In some implementations, input(s) 2 can be or otherwise represent sensor data. Machine-learned model(s) 1 can process the sensor data to generate an output. As an example, machine-learned model(s) 1 can process the sensor data to generate a recognition output. As another example, machine-learned model(s) 1 can process the sensor data to generate a prediction output. As another example, machine-learned model(s) 1 can process the sensor data to generate a classification output. As another example, machine-learned model(s) 1 can process the sensor data to generate a segmentation output. As another example, machine-learned model(s) 1 can process the sensor data to generate a visualization output. As another example, machine-learned model(s) 1 can process the sensor data to generate a diagnostic output. As another example, machine-learned model(s) 1 can process the sensor data to generate a detection output.

In some implementations, machine-learned model(s) 1 can be configured to perform a task that includes encoding input data for reliable and/or efficient transmission or storage (and/or corresponding decoding). For example, the task may be an audio compression task. The input may include audio data and the output may comprise compressed audio data. In another example, the input includes visual data (e.g. one or more images or videos), the output comprises compressed visual data, and the task is a visual data compression task. In another example, the task may comprise generating an embedding for input data (e.g. input audio or visual data). In some cases, the input includes audio data representing a spoken utterance and the task is a speech recognition task. The output may comprise a text output which is mapped to the spoken utterance. In some cases, the task comprises encrypting or decrypting input data. In some cases, the task comprises a microprocessor performance task, such as branch prediction or memory address translation.

In some implementations, the task is a generative task, and machine-learned model(s) 1 can be configured to output content generated in view of input(s) 2. For instance, input(s) 2 can be or otherwise represent data of one or more modalities that encodes context for generating additional content.

In some implementations, the task can be a text completion task. Machine-learned model(s) 1 can be configured to process input(s) 2 that represent textual data and to generate output(s) 3 that represent additional textual data that completes a textual sequence that includes input(s) 2. For instance, machine-learned model(s) 1 can be configured to generate output(s) 3 to complete a sentence, paragraph, or portion of text that follows from a portion of text represented by input(s) 2.

In some implementations, the task can be an instruction-following task. Machine-learned model(s) 1 can be configured to process input(s) 2 that represent instructions to perform a function and to generate output(s) 3 that advance a goal of satisfying the instruction function (e.g., at least a step of a multi-step procedure to perform the function). Output(s) 3 can represent data of the same or of a different modality as input(s) 2. For instance, input(s) 2 can represent textual data (e.g., natural language instructions for a task to be performed) and machine-learned model(s) 1 can process input(s) 2 to generate output(s) 3 that represent textual data responsive to the instructions (e.g., natural language responses, programming language responses, machine language responses, etc.). Input(s) 2 can represent image data (e.g., image-based instructions for a task to be performed, optionally accompanied by textual instructions) and machine-learned model(s) 1 can process input(s) 2 to generate output(s) 3 that represent textual data responsive to the instructions (e.g., natural language responses, programming language responses, machine language responses, etc.). One or more output(s) 3 can be iteratively or recursively generated to sequentially process and accomplish steps toward accomplishing the requested functionality. For instance, an initial output can be executed by an external system or be processed by machine-learned model(s) 1 to complete an initial step of performing a function. Multiple steps can be performed, with a final output being obtained that is responsive to the initial instructions.

In some implementations, the task can be a question answering task. Machine-learned model(s) 1 can be configured to process input(s) 2 that represent a question to answer and to generate output(s) 3 that advance a goal of returning an answer to the question (e.g., at least a step of a multi-step procedure to perform the function). Output(s) 3 can represent data of the same or of a different modality as input(s) 2. For instance, input(s) 2 can represent textual data (e.g., natural language instructions for a task to be performed) and machine-learned model(s) 1 can process input(s) 2 to generate output(s) 3 that represent textual data responsive to the question (e.g., natural language responses, programming language responses, machine language responses, etc.). Input(s) 2 can represent image data (e.g., image-based instructions for a task to be performed, optionally accompanied by textual instructions) and machine-learned model(s) 1 can process input(s) 2 to generate output(s) 3 that represent textual data responsive to the question (e.g., natural language responses, programming language responses, machine language responses, etc.). One or more output(s) 3 can be iteratively or recursively generated to sequentially process and accomplish steps toward answering the question. For instance, an initial output can be executed by an external system or be processed by machine-learned model(s) 1 to complete an initial step of obtaining an answer to the question (e.g., querying a database, performing a computation, executing a script, etc.). Multiple steps can be performed, with a final output being obtained that is responsive to the question.

In some implementations, the task can be an image generation task. Machine-learned model(s) 1 can be configured to process input(s) 2 that represent context regarding a desired portion of image content. The context can include text data, image data, audio data, etc. Machine-learned model(s) 1 can be configured to generate output(s) 3 that represent image data that depicts imagery related to the context. For instance, machine-learned model(s) 1 can be configured to generate pixel data of an image. Values for channel(s) associated with the pixels in the pixel data can be selected based on the context (e.g., based on a probability determined based on the context).

In some implementations, the task can be an audio generation task. Machine-learned model(s) 1 can be configured to process input(s) 2 that represent context regarding a desired portion of audio content. The context can include text data, image data, audio data, etc. Machine-learned model(s) 1 can be configured to generate output(s) 3 that represent audio data related to the context. For instance, machine-learned model(s) 1 can be configured to generate waveform data in the form of an image (e.g., a spectrogram). Values for channel(s) associated with pixels of the image can be selected based on the context. Machine-learned model(s) 1 can be configured to generate waveform data in the form of a sequence of discrete samples of a continuous waveform. Values of the sequence can be selected based on the context (e.g., based on a probability determined based on the context).

In some implementations, the task can be a data generation task. Machine-learned model(s) 1 can be configured to process input(s) 2 that represent context regarding a desired portion of data (e.g., data from various data domains, such as sensor data, image data, multimodal data, statistical data, etc.). The desired data can be, for instance, synthetic data for training other machine-learned models. The context can include arbitrary data type(s). Machine-learned model(s) 1 can be configured to generate output(s) 3 that represent data that aligns with the desired data. For instance, machine-learned model(s) 1 can be configured to generate data values for populating a dataset. Values for the data object(s) can be selected based on the context (e.g., based on a probability determined based on the context).

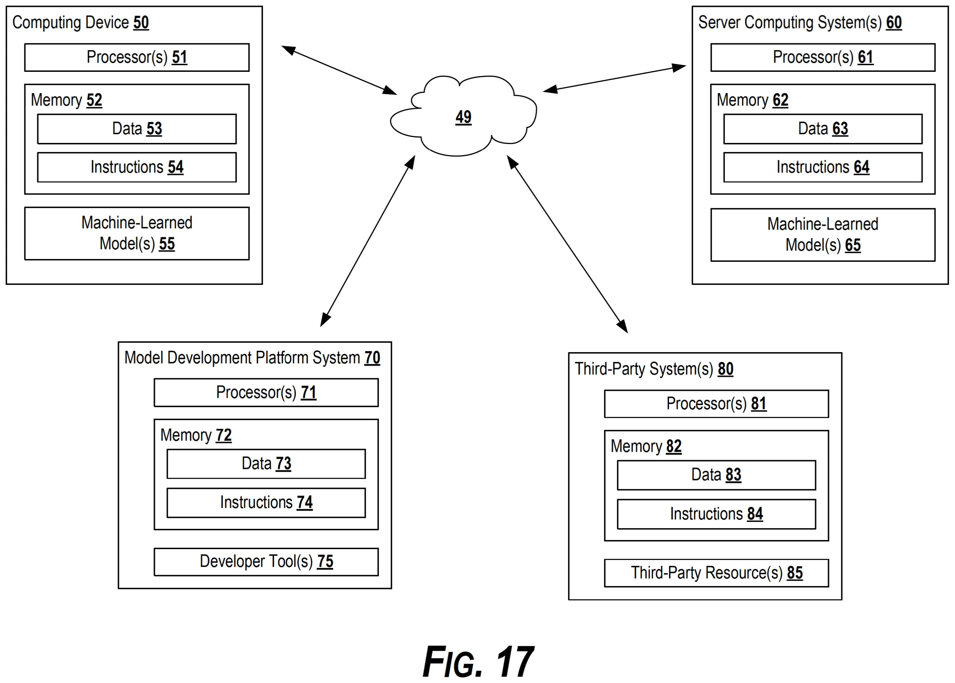

Figure 17 is a block diagram of an example networked computing system that can perform aspects of example implementations of the present disclosure. The system can include a number of computing devices and systems that are communicatively coupled over a network 49. An example computing device 50 is described to provide an example of a computing device that can perform any aspect of the present disclosure (e.g., implementing model host 31, client(s) 32, or both). An example server computing system 60 is described as an example of a server computing system that can perform any aspect of the present disclosure (e.g., implementing model host 31, client(s) 32, or both). Computing device 50 and server computing system(s) 60 can cooperatively interact (e.g., over network 49) to perform any aspect of the present disclosure (e.g., implementing model host 31, client(s) 32, or both). Model development platform system 70 is an example system that can host or serve model development platform(s) 12 for development of machine-learned models. Third-party system(s) 80 are example system(s) with which any of computing device 50, server computing system(s) 60, or model development platform system(s) 70 can interact in the performance of various aspects of the present disclosure (e.g., engaging third-party tools, accessing third-party databases or other resources, etc.).

Network 49 can be any type of communications network, such as a local area network (e.g., intranet), wide area network (e.g., Internet), or some combination thereof and can include any number of wired or wireless links. In general, communication over network 49 can be carried via any type of wired or wireless connection, using a wide variety of communication protocols (e.g., TCP/IP, HTTP, SMTP, FTP), encodings or formats (e.g., HTML, XML), or protection schemes (e.g., VPN, secure HTTP, SSL). Network 49 can also be implemented via a system bus. For instance, one or more devices or systems of Figure 17 can be co-located with, contained by, or otherwise integrated into one or more other devices or systems.

Computing device 50 can be any type of computing device, such as, for example, a personal computing device (e.g., laptop or desktop), a mobile computing device (e.g., smartphone or tablet), a gaming console or controller, a wearable computing device, an embedded computing device, a server computing device, a virtual machine operating on a host device, or any other type of computing device. Computing device 50 can be a client computing device. Computing device 50 can be an end-user computing device. Computing device 50 can be a computing device of a service provided that provides a service to an end user (who may use another computing device to interact with computing device 50).

Computing device 50 can include one or more processors 51 and a memory 52. Processor(s) 51 can be any suitable processing device (e.g., a processor core, a microprocessor, an ASIC, an FPGA, a controller, a microcontroller, etc.) and can be one processor or a plurality of processors that are operatively connected. Memory 52 can include one or more non-transitory computer-readable storage media, such as HBM, RAM, ROM, EEPROM, EPROM, flash memory devices, magnetic disks, etc., and combinations thereof. Memory 52 can store data 53 and instructions 54 which can be executed by processor(s) 51 to cause computing device 50 to perform operations. The operations can implement any one or multiple features described herein. The operations can implement example methods and techniques described herein.

Computing device 50 can also include one or more input components that receive user input. For example, a user input component can be a touch-sensitive component (e.g., a touch-sensitive display screen or a touch pad) that is sensitive to the touch of a user input object (e.g., a finger or a stylus). The touch-sensitive component can serve to implement a virtual keyboard. Other example user input components include a microphone, camera, LIDAR, a physical keyboard or other buttons, or other means by which a user can provide user input.

Computing device 50 can store or include one or more machine-learned models 55. Machine-learned models 55 can include one or more machine-learned model(s) 1, such as a sequence processing model 4. Machine-learned models 55 can include one or multiple model instance(s) 31-1. Machine-learned model(s) 55 can be received from server computing system(s) 60, model development platform system 70, third party system(s) 80 (e.g., an application distribution platform), or developed locally on computing device 50. Machine-learned model(s) 55 can be loaded into memory 52 and used or otherwise implemented by processor(s) 51. Computing device 50 can implement multiple parallel instances of machine-learned model(s) 55.

Server computing system(s) 60 can include one or more processors 61 and a memory 62. Processor(s) 61 can be any suitable processing device (e.g., a processor core, a microprocessor, an ASIC, an FPGA, a controller, a microcontroller, etc.) and can be one processor or a plurality of processors that are operatively connected. Memory 62 can include one or more non-transitory computer-readable storage media, such as HBM, RAM, ROM, EEPROM, EPROM, flash memory devices, magnetic disks, etc., and combinations thereof. Memory 62 can store data 63 and instructions 64 which can be executed by processor(s) 61 to cause server computing system(s) 60 to perform operations. The operations can implement any one or multiple features described herein. The operations can implement example methods and techniques described herein.

In some implementations, server computing system 60 includes or is otherwise implemented by one or multiple server computing devices. In instances in which server computing system 60 includes multiple server computing devices, such server computing devices can operate according to sequential computing architectures, parallel computing architectures, or some combination thereof.

Server computing system 60 can store or otherwise include one or more machine-learned models 65. Machine-learned model(s) 65 can be the same as or different from machine-learned model(s) 55. Machine-learned models 65 can include one or more machine-learned model(s) 1, such as a sequence processing model 4. Machine-learned models 65 can include one or multiple model instance(s) 31-1. Machine-learned model(s) 65 can be received from computing device 50, model development platform system 70, third party system(s) 80, or developed locally on server computing system(s) 60. Machine-learned model(s) 65 can be loaded into memory 62 and used or otherwise implemented by processor(s) 61. Server computing system(s) 60 can implement multiple parallel instances of machine-learned model(s) 65.

In an example configuration, machine-learned models 65 can be included in or otherwise stored and implemented by server computing system 60 to establish a client-server relationship with computing device 50 for serving model inferences. For instance, server computing system(s) 60 can implement model host 31 on behalf of client(s) 32 on computing device 50. For instance, machine-learned models 65 can be implemented by server computing system 60 as a portion of a web service (e.g., remote machine-learned model hosting service, such as an online interface for performing machine-learned model operations over a network on server computing system(s) 60). For instance, server computing system(s) 60 can communicate with computing device 50 over a local intranet or internet connection. For instance, computing device 50 can be a workstation or endpoint in communication with server computing system(s) 60, with implementation of machine-learned models 65 being managed by server computing system(s) 60 to remotely perform inference (e.g., for runtime or training operations), with output(s) returned (e.g., cast, streamed, etc.) to computing device 50. Machine-learned models 65 can work cooperatively or interoperatively with machine-learned models 55 on computing device 50 to perform various tasks.

Model development platform system(s) 70 can include one or more processors 71 and a memory 72. Processor(s) 71 can be any suitable processing device (e.g., a processor core, a microprocessor, an ASIC, an FPGA, a controller, a microcontroller, etc.) and can be one processor or a plurality of processors that are operatively connected. Memory 72 can include one or more non-transitory computer-readable storage media, such as HBM, RAM, ROM, EEPROM, EPROM, flash memory devices, magnetic disks, etc., and combinations thereof. Memory 72 can store data 73 and instructions 74 which can be executed by processor(s) 71 to cause model development platform system(s) 70 to perform operations. The operations can implement any one or multiple features described herein. The operations can implement example methods and techniques described herein. Example operations include the functionality described herein with respect to model development platform 12. This and other functionality can be implemented by developer tool(s) 75.

Third-party system(s) 80 can include one or more processors 81 and a memory 82. Processor(s) 81 can be any suitable processing device (e.g., a processor core, a microprocessor, an ASIC, an FPGA, a controller, a microcontroller, etc.) and can be one processor or a plurality of processors that are operatively connected. Memory 82 can include one or more non-transitory computer-readable storage media, such as HBM, RAM, ROM, EEPROM, EPROM, flash memory devices, magnetic disks, etc., and combinations thereof. Memory 82 can store data 83 and instructions 84 which can be executed by processor(s) 81 to cause third-party system(s) 80 to perform operations. The operations can implement any one or multiple features described herein. The operations can implement example methods and techniques described herein. Example operations include the functionality described herein with respect to tools and other external resources called when training or performing inference with machine-learned model(s) 1, 4, 16, 20, 55, 65, etc. (e.g., third-party resource(s) 85).

Figure 17illustrates one example arrangement of computing systems that can be used to implement the present disclosure. Other computing system configurations can be used as well. For example, in some implementations, one or both of computing system 50 or server computing system(s) 60 can implement all or a portion of the operations of model development platform system 70. For example, computing system 50 or server computing system(s) 60 can implement developer tool(s) 75 (or extensions thereof) to develop, update/train, or refine machine-learned models 1, 4, 16, 20, 55, 65, etc. using one or more techniques described herein with respect to model alignment toolkit 17. In this manner, for instance, computing system 50 or server computing system(s) 60 can develop, update/train, or refine machine-learned models based on local datasets (e.g., for model personalization/customization, as permitted by user data preference selections).

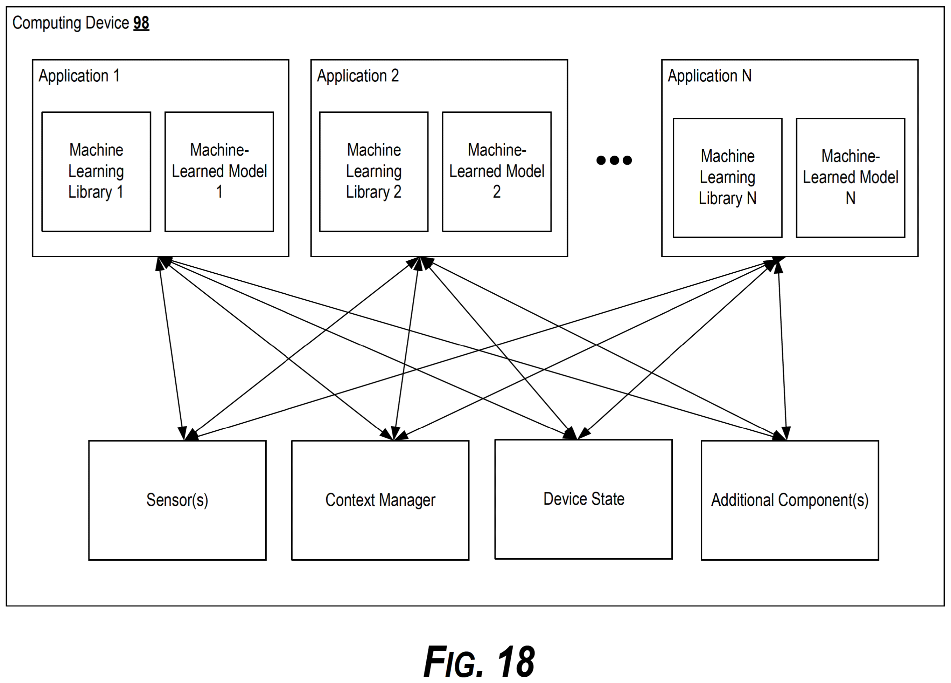

Figure 18 is a block diagram of an example computing device 98 that performs according to example embodiments of the present disclosure. Computing device 98 can be a user computing device or a server computing device (e.g., computing device 50, server computing system(s) 60, etc.). Computing device 98 can implement model host 31. For instance, computing device 98 can include a number of applications (e.g., applications 1 through N). Each application can contain its own machine learning library and machine-learned model(s). For example, each application can include a machine-learned model. Example applications include a text messaging application, an email application, a dictation application, a virtual keyboard application, a browser application, etc. As illustrated in Figure 18, each application can communicate with a number of other components of the computing device, such as, for example, one or more sensors, a context manager, a device state component, or additional components. In some implementations, each application can communicate with each device component using an API (e.g., a public API). In some implementations, the API used by each application is specific to that application.

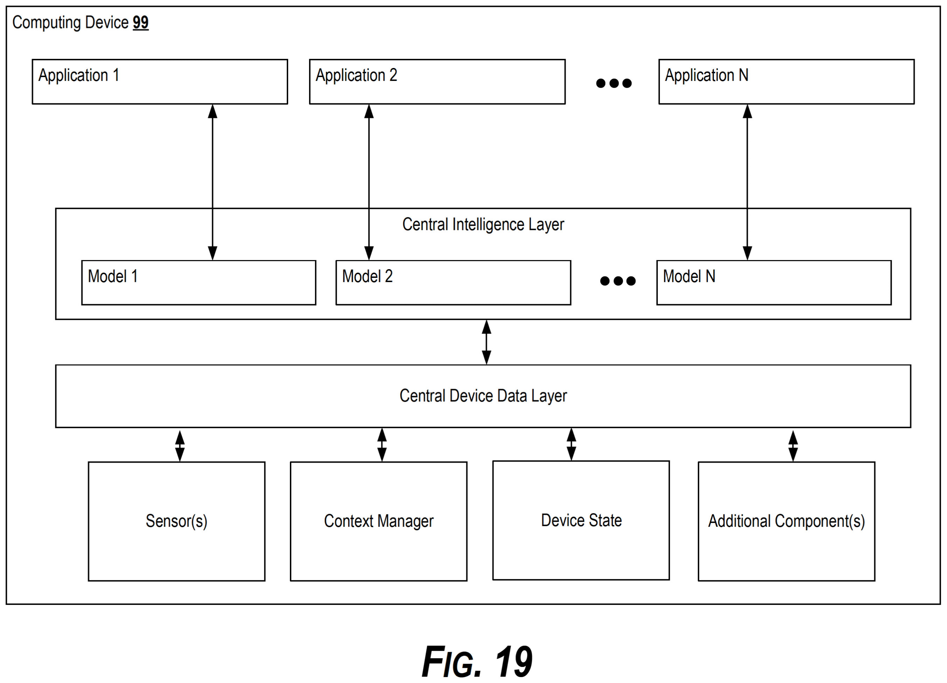

Figure 19 is a block diagram of an example computing device 99 that performs according to example embodiments of the present disclosure. Computing device 99 can be the same as or different from computing device 98. Computing device 99 can be a user computing device or a server computing device (e.g., computing device 50, server computing system(s) 60, etc.). Computing device 98 can implement model host 31. For instance, computing device 99 can include a number of applications (e.g., applications 1 through N). Each application can be in communication with a central intelligence layer. Example applications include a text messaging application, an email application, a dictation application, a virtual keyboard application, a browser application, etc. In some implementations, each application can communicate with the central intelligence layer (and model(s) stored therein) using an API (e.g., a common API across all applications).

The central intelligence layer can include a number of machine-learned models. For example, as illustrated in Figure 19, a respective machine-learned model can be provided for each application and managed by the central intelligence layer. In other implementations, two or more applications can share a single machine-learned model. For example, in some implementations, the central intelligence layer can provide a single model for all of the applications. In some implementations, the central intelligence layer is included within or otherwise implemented by an operating system of computing device 99.

The central intelligence layer can communicate with a central device data layer. The central device data layer can be a centralized repository of data for computing device 99. As illustrated in Figure 19, the central device data layer can communicate with a number of other components of the computing device, such as, for example, one or more sensors, a context manager, a device state component, or additional components. In some implementations, the central device data layer can communicate with each device component using an API (e.g., a private API).

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

While the present subject matter has been described in detail with respect to various specific example embodiments thereof, each example is provided by way of explanation, not limitation of the disclosure. Those skilled in the art, upon attaining an understanding of the foregoing, can readily produce alterations to, variations of, and equivalents to such embodiments. Accordingly, the subject disclosure does not preclude inclusion of such modifications, variations or additions to the present subject matter as would be readily apparent to one of ordinary skill in the art. For instance, features illustrated or described as part of one embodiment can be used with another embodiment to yield a still further embodiment. Thus, it is intended that the present disclosure cover such alterations, variations, and equivalents.

Aspects of the disclosure have been described in terms of illustrative embodiments thereof. Any and all features in the following claims can be combined or rearranged in any way possible, including combinations of claims not explicitly enumerated in combination together, as the example claim dependencies listed herein should not be read as limiting the scope of possible combinations of features disclosed herein. Accordingly, the scope of the present disclosure is by way of example rather than by way of limitation, and the subject disclosure does not preclude inclusion of such modifications, variations or additions to the present subject matter as would be readily apparent to one of ordinary skill in the art. Moreover, terms are described herein using lists of example elements joined by conjunctions such as "and," "or," "but," etc. It should be understood that such conjunctions are provided for explanatory purposes only. Clauses and other sequences of items joined by a particular conjunction such as "or," for example, can refer to "and/or," "at least one of", "any combination of' example elements listed therein, etc. Terms such as "based on" should be understood as "based at least in part on."

The term "can" should be understood as referring to a possibility of a feature in various implementations and not as prescribing an ability that is necessarily present in every implementation. For example, the phrase "X can perform Y" should be understood as indicating that, in various implementations, X has the potential to be configured to perform Y, and not as indicating that in every instance X must always be able to perform Y. It should be understood that, in various implementations, X might be unable to perform Y and remain within the scope of the present disclosure.

The term "may" should be understood as referring to a possibility of a feature in various implementations and not as prescribing an ability that is necessarily present in every implementation. For example, the phrase "X may perform Y" should be understood as indicating that, in various implementations, X has the potential to be configured to perform Y, and not as indicating that in every instance X must always be able to perform Y. It should be understood that, in various implementations, X might be unable to perform Y and remain within the scope of the present disclosure.

## Claims

1. A computing system for autonomous cybersecurity operations, the computing system comprising:
one or more processors; and
one or more non-transitory computer-readable media that store one or more sets of computer-executable instructions that, when executed by the one or more processors,
cause the computing system to implement a multi-agent cybersecurity operations framework comprising a plurality of cybersecurity agents;
wherein the plurality of cybersecurity agents autonomously interoperate to perform investigation and triage of cybersecurity events for one or more computer networks;
wherein each of the plurality of cybersecurity agents comprises a respective structured description of analysis principles and policies for a respective task or workflow performed by the respective cybersecurity agent;
wherein each of the plurality of cybersecurity agents is configured to implement or make calls to one or more sequence processing models when performing its respective task or workflow; and
wherein, when each cybersecurity agent implements or makes calls to the one or more sequence processing models, the cybersecurity agent is configured to provide at least a portion of the structured description of analysis principles and policies as conditioning data for the one or more sequence processing models.

2. The computing system of claim 1, wherein at least one of the respective structured description of analysis principles and policies for at least one of the plurality of cybersecurity agents contains information structured in a hierarchical structure.

3. The computing system of claim 1 or claim 2, wherein the plurality of cybersecurity agents comprise an orchestration agent and a plurality of sub-agents; and/or
wherein one or more of the plurality of cybersecurity agents are stateful processes that maintain a dynamic state; and/or
wherein one or more of the plurality of cybersecurity agents are configured to perform tool use with respect to one or more tools.

4. The computing system of one of the preceding claims, wherein the plurality of cybersecurity agents are configured to operate in a multi-stage pipeline, the multi-stage pipeline comprising a deterministic analysis stage in which one or more of the cybersecurity agents operate to:
receive an event;
extract one or more entity types from the event; and
retrieve supplemental information about the one or more entity types from one or
more knowledge stores.

5. The computing system of one of the preceding claims,
wherein the plurality of cybersecurity agents are configured to operate in a multi-stage pipeline, the multi-stage pipeline comprising an plan-and-execute stage in which one or more of the cybersecurity agents operate to perform a chain-of-thought planning step to generate a series of agent tasks; or
wherein the plurality of cybersecurity agents are configured to operate in a multi-stage pipeline, the multi-stage pipeline comprising a ReAct stage in which one or more of the cybersecurity agents operate to dynamically explore context of the event and seek out information to support possible hypotheses using one or more analyses from earlier investigation phases; or
wherein the plurality of cybersecurity agents are configured to operate in a multi-stage pipeline, the multi-stage pipeline comprising a final decision stage in which one or more of the cybersecurity agents operate to select one or both of: an escalation outcome and a remediation action.

6. The computing system of one of the preceding claims, wherein the computing system is configured to assign a unique event identifier to each of a plurality of different cybersecurity events investigated by the multi-agent framework and to maintain in a system memory stateful representations of multi-agent interactions associated with the different cybersecurity events indexed according to the unique event identifiers.

7. The computing system of one of the preceding claims, further comprising:
an investigative state repository that stores previous analysis traces or outcomes associated with previous cybersecurity events investigated by the multi-agent framework;
wherein at least one of the plurality of different agents is configured to perform retrieval-augmented-generation with respect to the investigative state repository.

8. The computing system of one of the preceding claims, further comprising:
an environmental state repository that stores a set of indexed entities and associated information;
wherein at least one of the plurality of different agents is configured to perform retrieval-augmented-generation with respect to the environmental state repository.

9. One or more non-transitory computer-readable media that store:
an investigative state repository that stores previous analysis traces or outcomes associated with previous cybersecurity events; and
one or more sets of computer-executable instructions that, when executed by a computing system, cause the computing system to implement a multi-agent cybersecurity operations framework comprising a plurality of cybersecurity agents;
wherein the plurality of cybersecurity agents autonomously interoperate to perform investigation and triage of cybersecurity events for one or more computer networks;
wherein each of the plurality of cybersecurity agents is configured to implement or make calls to one or more sequence processing models when performing its respective task or workflow; and
wherein, when at least one of the cybersecurity agents implements or makes calls to the one or more sequence processing models, the cybersecurity agent is configured to perform retrieval-augmented-generation with respect to the investigative state repository.

10. The one or more non-transitory computer-readable media of claim 9, further storing:
an environmental state repository that stores a set of indexed entities and associated information;
wherein at least one of the plurality of different agents is configured to perform retrieval-augmented-generation with respect to the environmental state repository.

11. The one or more non-transitory computer-readable media of claim 9 or claim 10, wherein:
each of the plurality of cybersecurity agents comprises a respective structured description of analysis principles and policies for a respective task or workflow performed by the respective cybersecurity agent; and
when each cybersecurity agent implements or makes calls to the one or more sequence processing models, the cybersecurity agent is configured to provide at least a portion of the structured description of analysis principles and policies as conditioning data for the one or more sequence processing models.

12. A computer-implemented method, comprising:
receiving, by a computing system comprising one or more processors, data descriptive of a cybersecurity event;
instantiating, by the computing system, a multi-agent cybersecurity operations framework comprising a plurality of cybersecurity agents,
wherein each of the plurality of cybersecurity agents is configured to implement or make calls to one or more sequence processing models when performing its respective task or workflow;
executing, by the computing system, a multi-stage pipeline that includes interactive communications between the plurality of cybersecurity agents to autonomously generate an output of the agentic framework; and
performing, by the computing system, one or more automated alert or remediation actions based on the output of the agentic framework.

13. The computer-implemented method of claim 12, the multi-stage pipeline comprising a deterministic analysis stage in which one or more of the cybersecurity agents operate to:
receive an event;
extract one or more entity types from the event; and
retrieve supplemental information about the one or more entity types from one or
more knowledge stores.

14. The computer-implemented method of claim 12 or claim 13,
the multi-stage pipeline comprising an plan-and-execute stage in which one or more of the cybersecurity agents operate to perform a chain-of-thought planning step to generate a series of agent tasks; and/or
the multi-stage pipeline comprising a ReAct stage in which one or more of the cybersecurity agents operate to dynamically explore context of the event and seek out information to support possible hypotheses using one or more analyses from earlier investigation phases; and/or
the multi-stage pipeline comprising a final decision stage in which one or more of the cybersecurity agents operate to select one or both of: an escalation outcome and a remediation action; and/or
wherein the method further comprises:
assigning, by the computing system, a unique event identifier to the cybersecurity event; and
maintaining, by the computing system, in a system memory indexed according to the unique event identifier, stateful representations of the interactive communications between the plurality of cybersecurity agents.

15. A computer program comprising instructions that, when executed by one of more processors, cause the one or more processors to perform the method of claims 12 to 14.
